# EUROPEAN PATENT APPLICATION

(11) **EP 1 770 495 A1**
(43) Date of publication of application: **04.04.2007**
(21) Application number: 06251872.5
(22) Date of filing: 03.04.2006
(51) Int. Cl.: G06F 3/06

(54) **Computer system having file management function, storage apparatus and file management method**

(30) Priority: 22.09.2005 JP 2005274971
(71) Applicant: Hitachi, Ltd., Tokyo (JP)
(72) Inventor: Shiga, Kenta c/o Hitachi Ltd., IP Group, Tokyo 100-8220 (JP); Nakatsuka, Daiki c/o Hitachi Ltd., IP Group, Tokyo 100-8220 (JP)
(74) Representative: Hodsdon, Stephen James

(57) **Abstract**

A computer system (10) including a file device (40, 60) that handles a file and a storage apparatus (20) that stores the file, the computer system includes: first and second real volumes (AV1, AV2) that have physical storage areas, wherein the storage apparatus contains the first and second real volumes; a virtual volume provider (212) that provides a virtual volume (VV1) having virtual storage areas to the file device; a real volume selector (214) that, when a write command for writing the file to the virtual volume is transmitted from the file device to the storage apparatus, selects one of the first and second real volumes based on an access path over which the write command is transmitted; a relation manager (216) that relates a virtual storage area on the virtual volume specified in the write command to a physical storage area on the selected real volume; and a write executor (218) that writes the file specified in the write command to the related physical storage area.

## Description

### BACKGROUND

The present invention relates to a file management technology for storing files in an appropriate volume (storage medium) in a storage apparatus.

A file management technology regarding a storage apparatus that saves files handled by a host computer, which migrates files to an appropriate volume based on the frequency of file access by the host computer, is known in the prior art. For example, a high-speed volume that operates at a relatively high access speed and a low-speed volume that operates at a lower access speed than the high-speed volume are made available in a storage apparatus, and the more frequently accessed files are stored on the high-speed volume, while the less frequently accessed files are stored on the low-speed volume. In this Specification, 'file storage' refers to the storage of a file on at least one of a plurality of volumes, while 'file migration' refers to the copying of a file stored on a particular volume to a different volume and the deletion of the file from the source volume. This prior art file management technology is disclosed in JP-A-9-297699.

However, in the conventional file management technology, because the migrated files are deleted from the source volume, such deletion hinders the access to the migrated files from the host computer. For example, where the migrated file is a data file, the operation to search for such file must be carried out on the host computer, and where the migrated file is a program file, a failure may occur in the operation of the host computer.

The present invention was devised in order to preferably address the above problems, and an object thereof is to provide a file management technology that ensures that the host computer can smoothly access migrated files.

In order to preferably address these problems, the computer system of an aspect of the invention is a computer system including a file device that handles a file and a storage apparatus that stores the file, the computer system comprising: first and second real volumes that have physical storage areas, the storage apparatus contains the first and second real volumes; a virtual volume provider that provides a virtual volume having virtual storage areas to the file device; a real volume selector that, when a write command for writing the file to the virtual volume is transmitted from the file device to the storage apparatus, selects one of the first and second real volumes based on an access path over which the write command is transmitted; a relation manager that relates a virtual storage area on the virtual volume specified in the write command to a physical storage area on the selected real volume; and a write executor that writes the file specified in the write command to the related physical storage area. As a result, a file can be written to the appropriate real volume based on a write command pertaining to the virtual volume without changing the access command system.

The computer system described above can also include the following implementations. For example, the computer system may further comprise a read executor that, when a read command for reading the file from the virtual volume is transmitted from the file device to the storage apparatus, reads the file specified in the read command from the physical storage area related to the virtual storage area specified in the read command. As a result, where file migration has been executed between real volumes based on a write command pertaining to the virtual volume, because the migration target file continues to exist in the virtual volume before and after migration, smooth access by the host computer to the migration target file can be ensured.

It is also acceptable if the computer system further comprises a plurality of access ports that receive an access command for accessing the virtual volume from the file device, wherein the write command includes destination information that specifies one of the plurality of access ports as a transmission destination, and the real volume selector selects one of the first and second real volumes based on the destination information included in the write command. As a result, the real volume on which the file is to be written can be selected in accordance with the access port receiving the write command.

It is furthermore acceptable if the computer system further comprises a plurality of the file devices, wherein the write command includes source information that specifies one of the plurality of file devices as a transmission source, and the real volume selector selects one of the first and second real volumes based on the source information included in the write command. As a result, the real volume on which the file is to be written can be selected in accordance with the file device sending the write command.

It is furthermore acceptable if the computer system further comprises:
a plurality of access ports that receive an access command for accessing the virtual volume from the file device; and a plurality of the file devices, wherein the write command includes: destination information that specifies one of the plurality of access ports as a transmission destination; and source information that specifies one of the plurality of file devices as a transmission source, and the real volume selector selects one of the first and second real volumes based on the combination of the destination information and the source information included in the write command. As a result, the real volume to which a file is to be written can be selected based on a combination of the file device sending the write command and the access port receiving the write command.

It is furthermore acceptable if the storage apparatus comprises: a first storage apparatus that contains the first real volume; and a second storage apparatus that contains the second real volume, and the first and second storage apparatuses are mutually connected over a network. As a result, smooth access to files by the host computer before and after file migration can be ensured while files are stored on the appropriate real volume in accordance with the status of file access by the host computer.

It is furthermore acceptable if the storage apparatus includes a first storage device that contains a first real volume and a second storage device that contains a second real volume and the first and second storage devices are mutually connected over a network. As a result, where a file is migrated between the plurality of storage devices connected over the network, smooth access to the file by the host computer before and after file migration can be ensured.

Moreover, at least one of the first and second real volumes of the computer system may comprise a plurality of hard disks controlled by RAID (Redundant Arrays of Independent (Inexpensive) Disks) technology. As a result, the reliability of the real volume in connection with file storage can be improved.

The invention is not limited to the form of a computer system, and may be applied as a storage apparatus that stores files handed by a file device, a file management method that manages files that are stored by a storage device, a program that executes functions to store files handed by a file device on the computer of a storage apparatus, or the like. Furthermore, the invention is not limited to the forms described above, and may naturally be implemented in various forms within the essential scope of the invention.

### BRIEF DESCRIPTION OF THE DRAWINGS

Fig. 1 is a block diagram showing the basic configuration of a computer system 10.

Fig. 2 is a block diagram showing the functional internal configuration of a storage apparatus 20.

Fig. 3 is an explanatory drawing showing one example of a target table 232 in the storage apparatus 20.

Fig. 4 is an explanatory drawing showing one example of a volume relation table 234 in the storage apparatus 20.

Fig. 5 is an explanatory drawing showing one example of a mapping table 236 in the storage apparatus 20.

Fig. 6 is an explanatory drawing showing one example of an unassigned block table 238 in the storage apparatus 20.

Fig. 7 is an explanatory drawing showing a virtual volume configuration screen 300 displayed during a virtual volume configuration process.

Fig. 8 is an explanatory drawing showing an example of a host management table 562 in a host management device 50.

Fig. 9 is an explanatory drawing showing a host configuration screen 500 displayed during a host configuration process executed on the host management device 50.

Fig. 10 is an explanatory drawing showing an example of a file migration management table 662 in a file migration device 60.

Fig. 11 is an explanatory drawing showing a migration condition configuration screen 600 displayed during a migration condition configuration process executed on the file migration device 60.

Fig. 12 is a flow chart showing a virtual volume supply process executed by the storage apparatus 20 of the computer system 10.

Fig. 13 is a flow chart of a write command process executed by the storage apparatus 20 of the computer system 10.

Fig. 14 is a flow chart of a read command process executed by the storage apparatus 20 of the computer system 10.

Fig. 15 is a flow chart showing a file migration process executed by the file migration device 60 of the computer system 10.

Fig. 16 is an explanatory drawing showing the volume associations between a virtual volume VV1 and real volumes AV1, AV2.

Fig. 17 is an explanatory drawing showing the volume associations following execution on the storage device 20 of a write command issued from a host computer 40 in the state shown in Fig. 16.

Fig. 18 is an explanatory drawing showing the mapping table 236 in the situation shown in Fig. 17.

Fig. 19 is an explanatory drawing showing the unassigned block table 238 in the situation shown in Fig. 17.

Fig. 20 is an explanatory drawing showing volume associations following execution on the storage apparatus 20 of a write command issued by the file migration device 60 in the state shown in Fig. 17.

Fig. 21 is an explanatory drawing showing the mapping table 236 in the situation shown in Fig. 20.

Fig. 22 is an explanatory drawing showing the unassigned block table 238 in the situation shown in Fig. 20.

Fig. 23 is an explanatory drawing showing the volume associations following execution on the storage device 20 of a write command issued by a host computer 40 in the state shown in Fig. 20.

Fig. 24 is an explanatory drawing showing the mapping table 236 in the situation shown in Fig. 23.

Fig. 25 is an explanatory drawing showing the unassigned block table 238 in the situation shown in Fig. 23.

Fig. 26 is an explanatory drawing showing the volume associations following execution on the storage device 20 of a write command issued from the host computer 40 in the state shown in Fig. 23.

Fig. 27 is an explanatory drawing showing the mapping table 236 in the situation shown in Fig. 26.

Fig. 28 is an explanatory drawing showing the unassigned block table 238 in the situation shown in Fig. 26.

Fig. 29 is a flow chart showing the file migration process executed by the file migration device 60 of the computer system 10 of a second embodiment.

Fig. 30 is an explanatory drawing showing the volume associations following execution on the storage apparatus 20 of a file name change command issued by the file migration device 60 in the state shown in Fig. 17.

Fig. 31 is an explanatory drawing showing the volume associations following execution on the storage apparatus 20 of a write command issued by the file migration device 60 in the situation shown in Fig. 30.

Fig. 32 is an explanatory drawing showing the mapping table 236 in the situation shown in Fig. 31.

Fig. 33 is an explanatory drawing showing the unassigned block table 238 in the situation shown in Fig. 31.

Fig. 34 is an explanatory drawing showing the volume associations following execution on the storage apparatus 20 of a file delete command issued by the file migration device 60 in the state shown in Fig. 31.

Fig. 35 is a block diagram showing the basic configuration of a computer system 12 of a third embodiment.

In order to further clarify the configuration and operation of the invention described above, the computer system in which the invention is applied will be described below according to the following sequence:
A. First embodiment,
   A-1. Configuration of computer system 10,
   A-2. Operation of computer system 10;
B. Second embodiment;
C. Third embodiment;
D. Other embodiments.

### A. First embodiment:

### A-1. Configuration of computer system 10:

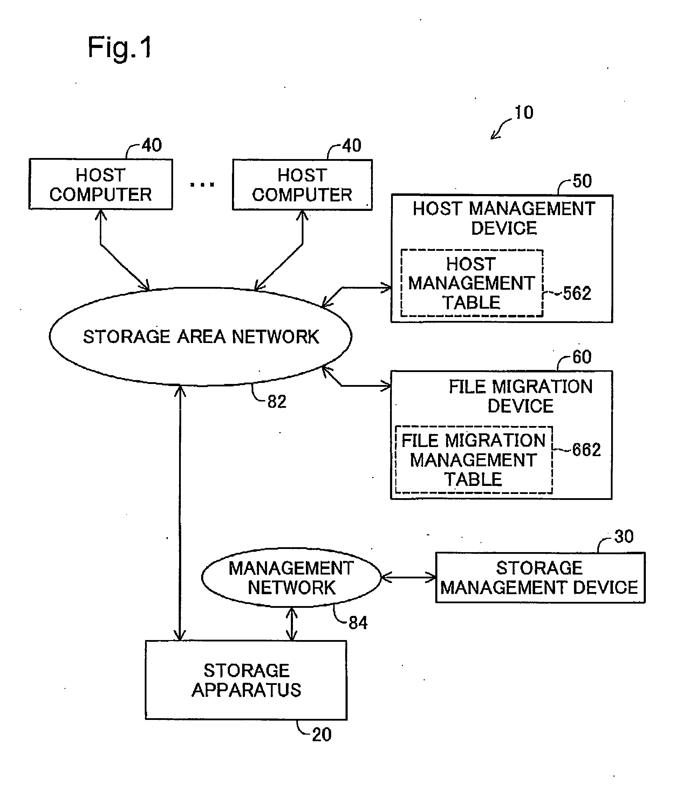

Fig. 1 is a block diagram showing the basic configuration of a computer system 10. The computer system 10 is a system that executes computer-based information processing, and includes host computers 40 that execute information processing using files, a host management device 50 that manages the host computers 40, a storage apparatus 20 that stores files handed by the host computers 40, a storage management device 30 that manages the storage apparatus 20, and a file migration device 60 that manages the migration of files stored by the storage apparatus 60. In this embodiment, the storage apparatus 20 can be connected to a plurality of host computers 40, and can store files handled by individual host computers 40. In this embodiment, the host computers 40 and the file migration device 60 are collectively termed a 'file device'.

In this embodiment, the storage apparatus 20, host computers 40, host management device 50 and file migration device 60 are communicably interconnected over a storage area network 82 comprising an IP network employing the IP (Internet Protocol), while the storage apparatus 20 and storage management device 30 are communicably interconnected over a management network 84 comprising an IP network different from the storage area network 82. In this embodiment, access to the storage apparatus 20 by a host computer 40 and access to the storage apparatus 20 by the file migration device 60 are carried out using the iSCSI (internet Small Computer System Interface) protocol, which encapsulates SCSI commands and SCSI responses via TCP/IP.

In this embodiment, the system configuration of the computer system 10 is that of a storage-centric system in which all of the files that contain the operating system, the application software and the data that is handled by these programs are stored in a concentrated fashion on the storage apparatus 20.

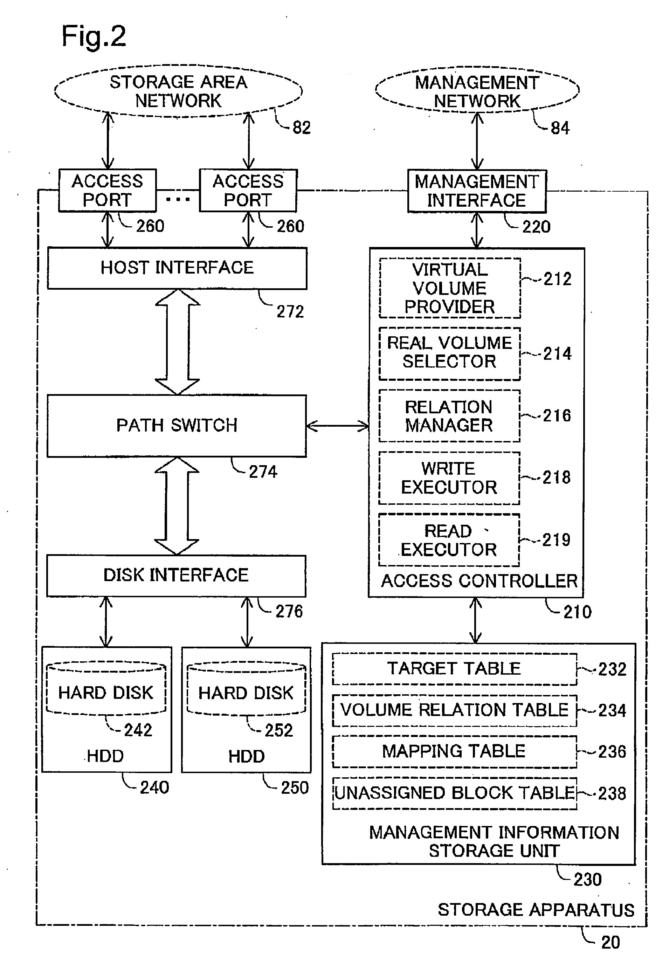

Fig. 2 is a block diagram showing the internal functional configuration of the storage apparatus 20. The storage apparatus 20 includes hard disk drives (HDDs) 240, 250 that respectively drive hard disks 242, 252 that each have physical storage areas, an access controller 210 that controls access to the HDDs 240, 250, a management information storage unit 230 that stores information used by the access controller 210, a plurality of access ports 260 that are connected over the storage area network 82 to the host computers 40 and file migration device 60 comprising a file device that handles files, a path switch unit 274 that switches the transmission path for the data transmitted between the access ports 260 and the HDDS 240, 250 based on instructions from the access controller 210, a host interface 272 that connects the access ports 260 and the path switch unit 274, a disk interface 276 that connects the HDDs 240, 250 and the path switch unit 274, and a management interface 220 that is connected to the storage management device 30 over the management network 84.

In this embodiment, real blocks comprising physical storage areas on the hard disks 242, 252 are divided logically into one or more real volumes, and these real volumes are identified using a logical unit number (LUN). In this embodiment, each real block has a storage capacity of 512 bytes, but this number may be configured to any appropriate number in accordance with the specifications of the storage apparatus 20. In this embodiment, the HDD 240 is a HDD compatible with data transmission according to the fiber channel (FC) standard, while the HDD 250 is a HDD compatible with data transmission according to the SATA (Serial AT Attachment) standard. The HDD 240 can operate at a higher access speed than the HDD 250.

The access controller 210 of the storage apparatus 20 includes a virtual volume provider 212 that provides to the host computers 40 or the file migration device 60 a virtual volume having virtual storage areas, a real volume selector 214 that selects a real volume to which a file is to be written based on the access path specified in a write command pertaining to a virtual volume, a relation manager 216 that manages associations between virtual storage areas and physical storage areas, a write executor 218 that writes data specified in a write command to a physical storage area, and a read executor that reads out from a physical storage area data specified in a read command pertaining to a virtual volume.

The access controller 210 of this embodiment is a computer that includes such hardware components as a central processing unit (CPU), read-only memory (ROM) and random-access memory (RAM). In this embodiment, in addition to an operating system, application software such as programs that implement the functions of the virtual volume provider 212, real volume selector 214, relation manager 216, write executor 218 and read executor 219 is installed in the access controller 210. The operation of the access controller 210 will be explained in detail below.

In this embodiment, the communication processing carried out between the host computers 40 or the file migration device 60 and the storage apparatus 20 based on the iSCSI protocol is realized via hardware operations executed by the host interface 272 of the storage apparatus 20, but it may also be realized via software operations executed by the access controller 210 of the storage apparatus 20.

The management information storage unit 230 of the storage apparatus 20 stores, as information used to manage the HDDs 240, 250 via the access controller 210, a target table 232 that stores information that associates virtual volumes with iSCSI targets, a volume relation table 234 that stores information pertaining to the associations between virtual volumes and real volumes used for data writing, a mapping table 236 that stores information pertaining to the statuses of the virtual storage areas on the virtual volumes, and an unassigned block table 238 that stores information pertaining to the statuses of the physical storage areas on the real volumes. The target table 232, volume relation table 234, mapping table 236 and unassigned block table 238 are updated as needed by the access controller 210.

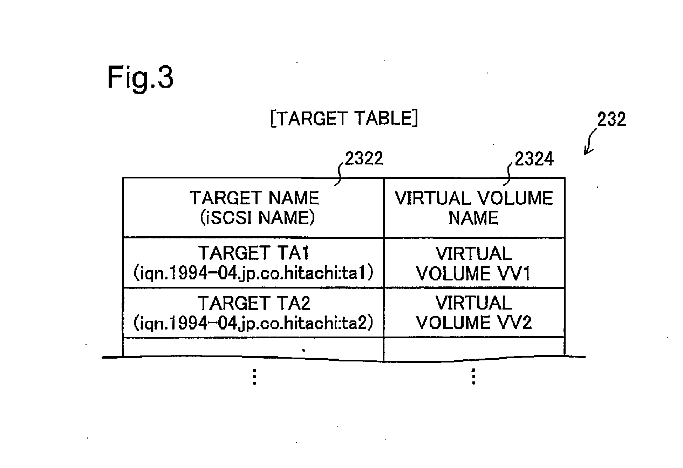

Fig. 3 is an explanatory drawing showing an example of the target table 232 on the storage apparatus 20. The target table 232 stores, as information that associates virtual volumes with iSCSI targets, target names 2322 that each indicate the identifier for each iSCSI target and virtual volume names 2324 that each indicate the identifier for the virtual volume corresponding to each target name 2322. For example, the target table 232 shown in Fig. 3 shows a situation in which the virtual volume VV1 is associated with the target TA1 that is assigned the iSCSI name 'iqn.1994-04.jp.co.hitachi:ta1'.

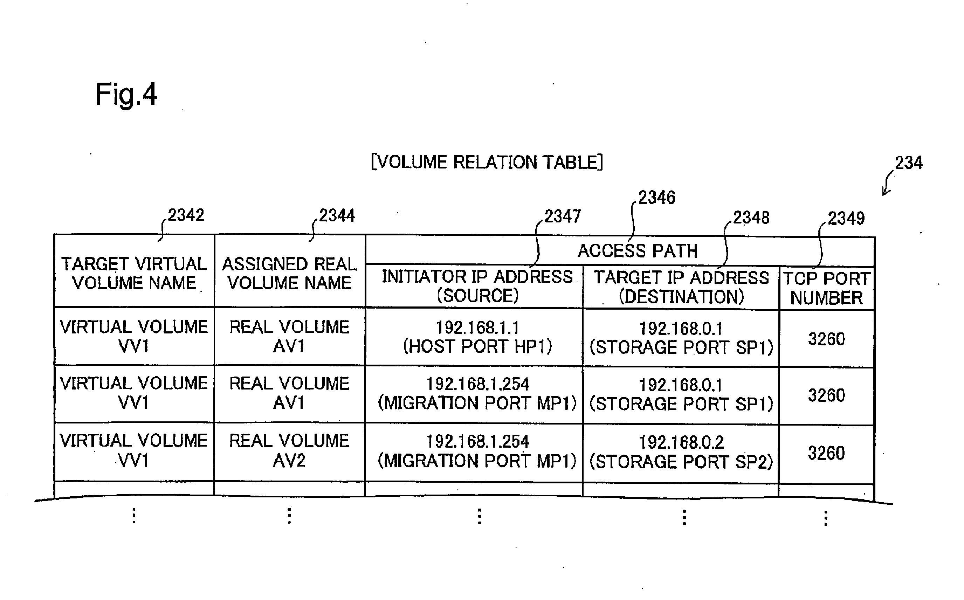

Fig. 4 is an explanatory drawing showing an example of the volume relation table 234 on the storage apparatus 20. The volume relation table 234 stores, as information pertaining to the associations between virtual volumes and real volumes used for data writing, target virtual volume names 2342 that each indicate the identifier for a virtual volume assigned to an iSCSI target, assigned real volume names 2344 that each indicate the identifier for the real volume assigned to a given virtual volume, and an access path 2346 that indicates the path condition for the write command based on which a real volume is assigned to a given virtual volume. In this embodiment, the volume relation table 234 stores as an access path 2346 indicating the write command path condition an initiator IP address 2347 that indicates the address of the sender of the write command on the IP network, a target IP address 2348 that indicates the address of the recipient of the write command on the IP network, and a TCP port number 2349 that indicates the TCP port of the recipient of the write command.

For example, it is shown in the volume relation table 234 of Fig. 4 that where the IP address of the sender of a write command sent to the virtual volume VV1 is the IP address '192.168.1.1' assigned to the host computer 40 identified as the host port HP 1 among the plurality of host computers 40, and the IP address of the recipient of the write command is the IP address '192.168.0.1' assigned to the access port 260 identified as the storage port SP1 among the plurality of storage ports 260, and the TCP port number of the write command recipient is '3260', the real volume AV1 is assigned to the virtual volume VV1.

Furthermore, the volume relation table 234 shown in Fig. 4 also shows that where the IP address of the sender of a write command sent to the virtual volume VV1 is the IP address '192.168.1.254' assigned to the file migration device 60 identified as the migration port MP 1, the IP address of the recipient of the write command is the IP address '192.168.0.1' assigned to the access port 260 identified as the storage port SP1, and the TCP port number of the write command recipient is '3260', the real volume AV1 is assigned to the virtual volume VV1.

Moreover, the volume relation table 234 shown in Fig. 4 additionally shows that where the IP address of the sender of a write command sent to the virtual volume VV1 is the IP address '192.168.1.254' assigned to the file migration device 60 identified as the migration port MP1, the IP address of the recipient of the write command is the IP address '192.168.0.2' assigned to the access port 260 identified as the storage port SP2, and the TCP port number of the write command recipient is '3260', the real volume AV2 is assigned to the virtual volume VV1. In this embodiment, the real volume AV1 comprises real blocks on the hard disk 242 and the real volume AV2 comprises real blocks on the hard disk 252.

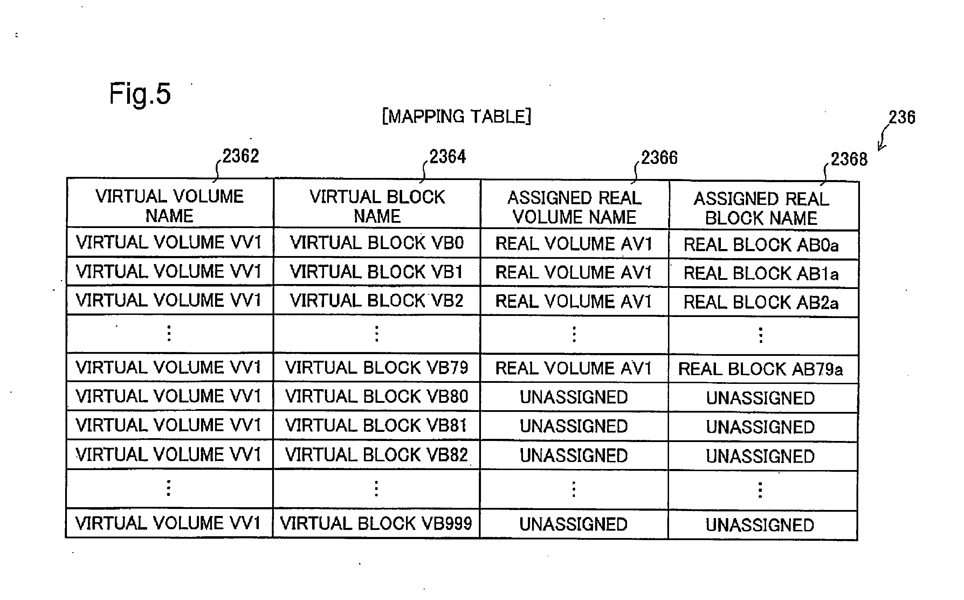

Fig. 5 is an explanatory drawing showing an example of the mapping table 236 on the storage apparatus 20. The mapping table 236 stores, as information pertaining to the statuses of the virtual storage areas on the virtual volumes, virtual volume names 2362 that each indicate the identifier for a virtual volume, virtual block names 2364 that each indicate the identifier for a virtual block belonging to a given virtual volume, assigned real volume names 2366 that each indicate the identifier for a real volume assigned to a given virtual volume, and assigned real block names 2368 that each indicate the identifier for a real block assigned to a given virtual block. In this embodiment, each virtual block has the same storage capacity as a real block, i.e., 512 bytes, but this capacity may naturally be configured appropriately in accordance with the specifications of the storage apparatus 20.

For example, the mapping table shown in Fig. 5 indicates that the virtual blocks VB0-VB79 on the virtual volume VV1 are assigned to the real blocks AB0a-AB79a on the real volume AV1 on a one-to-one basis, and that the virtual blocks VB80-VB999 on the virtual volume VV1 are not assigned to real blocks. The mapping table 236 shown in Fig. 5 shows only the statuses of the virtual storage areas on the virtual volume VV1, but where other virtual volumes exist, information regarding such other virtual volumes is also stored in the mapping table 236 in the same way.

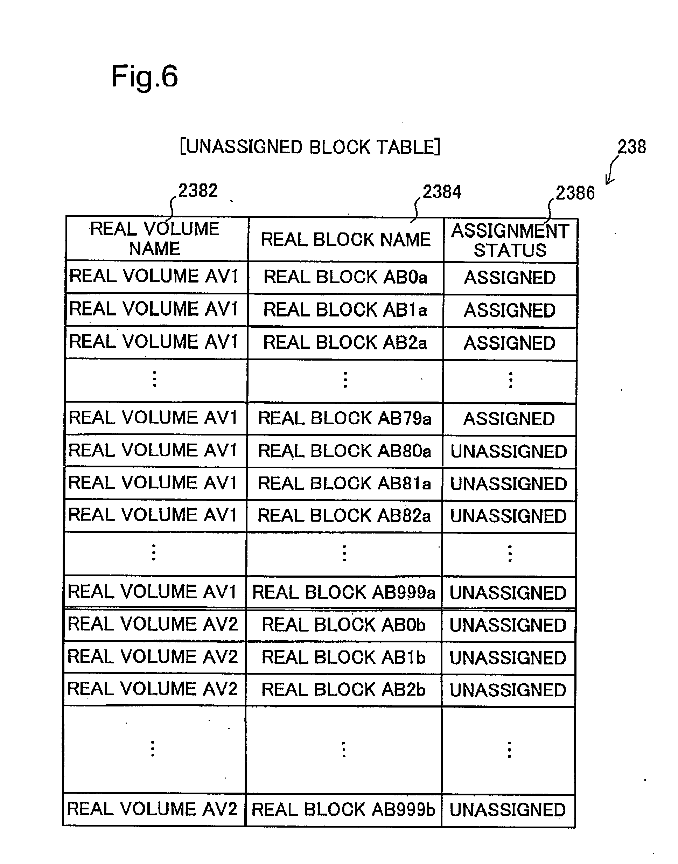

Fig. 6 is an explanatory drawing showing an example of the unassigned block table 238 in the storage apparatus 20. The unassigned block table 238 stores, as information pertaining to the statuses of the physical storage areas on the real volumes, real volume names 2382 that each indicate the identifier for a real volume, real block names 2384 that each indicate the identifier for a real block belonging to a given real volume, and assignment statuses 2386 that each indicate whether or not a given real block is assigned to a virtual volume.

For example, it is seen from the unassigned block table 238 shown in Fig. 6 that the real blocks AB0a-AB79a on the real volume AV1 have a status of 'assigned' to a virtual block, the real blocks AB80-AB999a on the real volume AV1 have a status of 'unassigned' to a virtual block, and the real blocks AB0b-AB999b on the real volume AV2 have a status of 'unassigned' to a virtual block.

Returning to Fig. 1, in this embodiment, the storage management device 30 of the computer system 10 is a computer that includes as hardware, in addition to the CPU, ROM, RAM and HDD, a network interface that connects the storage management device 30 to the storage apparatus 20 via the management network 84, as well as a user interface that enables information exchange with the administrator of the storage apparatus 20, such interface comprising a mouse, keyboard, display and the like. Various applications are installed on the storage management device 30 in addition to the OS. The storage management device 30 executes, as one of the processes to manage the storage apparatus 20, a virtual volume configuration process that configures the virtual volumes provided by the storage apparatus 20.

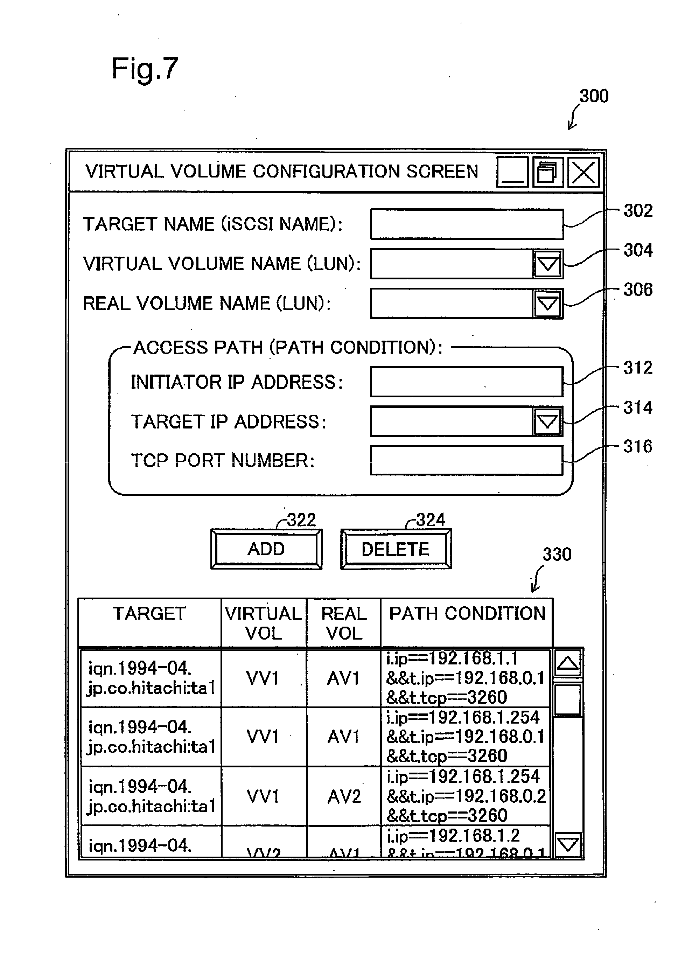

Fig. 7 is an explanatory drawing showing a virtual volume configuration screen 300 displayed when the virtual volume configuration process is performed on the storage management device 30. The virtual volume configuration screen 300 is a GUI (graphical user interface) screen displayed by the storage management device 30, and the administrator of the storage apparatus 20 updates the target table 232 and the volume relation table 234 residing on the storage apparatus 20 by operating the storage management device 30 via the virtual volume configuration screen 300.

The virtual volume configuration screen 300 has an input window 302 that receives administrator input of the iSCSI name comprising the identifier for an iSCSI target, an input window 304 that receives administrator input of the virtual volume name comprising the identifier for the virtual volume corresponding to that target name, an input window 306 that receives administrator input of the real volume name comprising the identifier for the real volume assigned to that virtual volume, an input window 312 that receives input of the initiator IP address indicating the write command sender, input window 314 that receives input of the target IP address indicating the write command recipient, and input window 316 that receives input of the TCP port number for the write command recipient, whose combined inputs determine the real volume that is assigned to a given virtual volume, as well as a button 322 that receives an instruction from the administrator to add the configuration information input in the input windows 302, 304, 306, 312, 314, 316 to the target table 232 and volume relation table 234 on the storage apparatus 20, a button 324 that receives an instruction from the administrator to delete the configuration information input in the input windows 302, 304, 306, 312, 314, 316 from the target table 232 and volume relation table 234 on the storage apparatus 20, and a display window 330 that indicates the configuration status of the target table 232 and volume relation table 234.

Returning to Fig. 1, in this embodiment, each host computer 40 of the computer system 10 is a computer that includes as hardware, in addition to the CPU, ROM and RAM, a network interface that connects the host computer 40 to the storage apparatus 20 and the host management device 50 via the storage area network 82, as well as a user interface that enables information exchange with the administrator of the host computer 40, such interface comprising a mouse, keyboard, display and the like. In this embodiment, each host computer 40 comprising a user terminal for the storage-centric system operates by reading the OS, applications and data stored on the storage apparatus 20. The host computers 40 may alternatively comprise computers equipped with a HDD.

The host management device 50 of the computer system 10 shown in Fig. 1 is a computer that includes as hardware, in addition to the CPU, ROM, RAM and HDD, a network interface that connects the host management device 50 to the storage apparatus 20, host computers 40 and file migration device 60 via the storage area network 82, as well as a user interface that enables information exchange with the administrator of each host computer 40, such interface comprising a mouse, keyboard, display and the like. In addition to the OS, various application programs are installed on the host management device 50. The host management device 50 has a host management table 562 that stores information used to manage the status of use of the storage apparatus 20 by the various host computers 40.

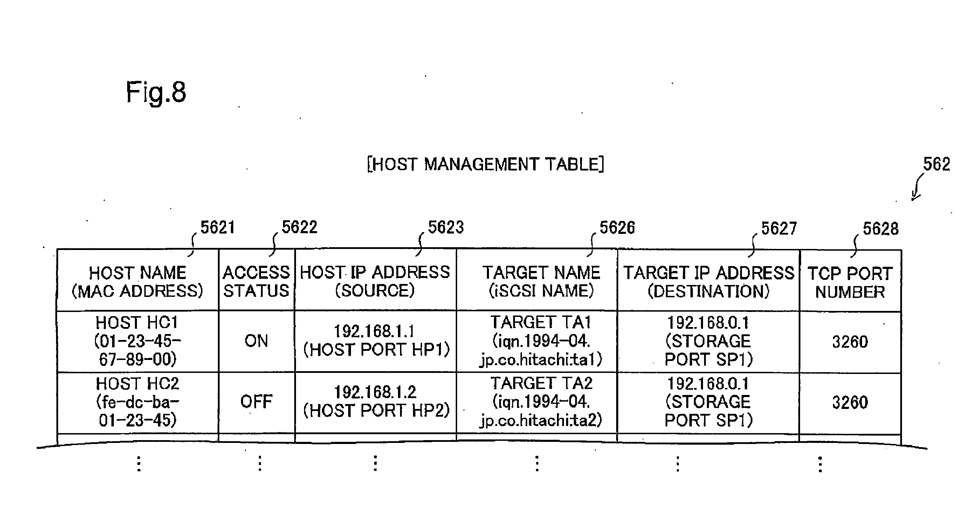

Fig. 8 is an explanatory drawing showing one example of the host management table 562 of the host management device 50. The host management table 562 stores, as information used to manage the status of use of the storage apparatus 20 by the various host computers 40, host names 5621 that each indicate the MAC (Media Access Control) address of each host computer 40, which is a network device-specific identifier thereof, access statuses 5622 indicating whether or not each host computer 40 is connected to the storage apparatus 20, host IP addresses 5623 that indicate the IP address allocated to each host computer 40, target names 5626 that each indicate the iSCSI name comprising an identifier for an iSCSI target that can be used by a given host computer 40, target IP addresses 5627 that each indicate the IP address of a given iSCSI target, and TCP port numbers 5628 that each indicate the TCP port of a given iSCSI target.

For example, the host management table 562 shown in Fig. 8 shows that the host computer 40 having the MAC address '01-23-45-67-89-00' and identified as host HCl is logged onto the storage apparatus 20, has a host port HP1 that is assigned an IP address of '168.192.1.1', and accesses the target TA1 having the iSCSI name of 'iqn.1994-04.jp.co.hitachi:ta1' through the TCP port number '3260' via the storage port SP1 to which is assigned the IP address of '192.168.0.1'. Similarly, it is also shown in the host management table 562 of Fig. 8 that the host computer 40 having the MAC address 'fe-dc-ba-01-23-45' and identified as host HC2 is logged out of the storage apparatus 20, has a host port HP2 that is assigned an IP address of '168.192.1.2', and accesses the target TA2 having the iSCSI name of 'iqn.1994-04.jp.co.hitachi:ta2' through the TCP port number '3260' via the storage port SP1 to which is assigned the IP address of'192.168.0.1'.

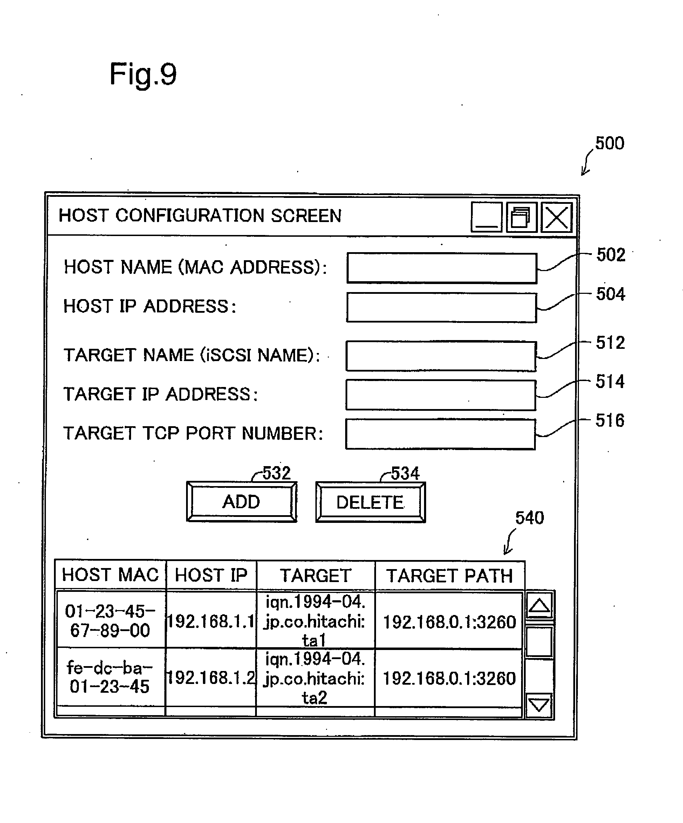

The host management device 50 executes, as one of the processes by which it manages host computers 40, a host configuration process that configures the access format governing access to the storage apparatus 20 by the host computers 40. Fig. 9 is an explanatory drawing showing a host configuration screen 500 displayed on the host management device 50 during the host configuration process. The host configuration screen 500 is a GUI screen displayed by the host management device 50, and the host management table 562 is updated by the administrator of the host computers 40 by operating the host management device 50 via the host configuration screen 50.

The host configuration screen 500 has an input window 502 that receives administrator input of the MAC address comprising the identifier for a host computer 40, an input window 504 that receives administrator input of the IP address assigned to that host computer 40, an input window 512 that receives administrator input of the iSCSI name comprising the identifier for an iSCSI target that can be used by that host computer 40, an input window 514 that receives administrator input of the IP address of that iSCSI target, an input window 516 that receives administrator input of the TCP port number of that iSCSI target, a button 532 that receives an instruction from the administrator to add the configuration information input in the input windows 502, 504, 512, 514, 516 to the host management table 562, a button 534 that that receives an instruction from the administrator to delete the configuration information input in the input windows 502, 504, 512, 514, 516 from the host management table 562, and a display window 540 that indicates the configuration status of the host management table 562.

Returning to Fig. 1, in this embodiment, the file migration device 60 of the computer system 10 is a computer that includes as hardware, in addition to the CPU, ROM, RAM and HDD, a network interface that connects the file migration device 60 to the storage apparatus 20 and the host management device 50 via the storage area network 82, as well as a user interface that enables information exchange with the user of the file migration device 60, such interface comprising a mouse, keyboard, display and the like. In addition to the OS, various application programs are installed on the file migration device 60. The file migration device 60 has a file migration management table 662 that stores information used to manage the migration of files stored on the host computers 40.

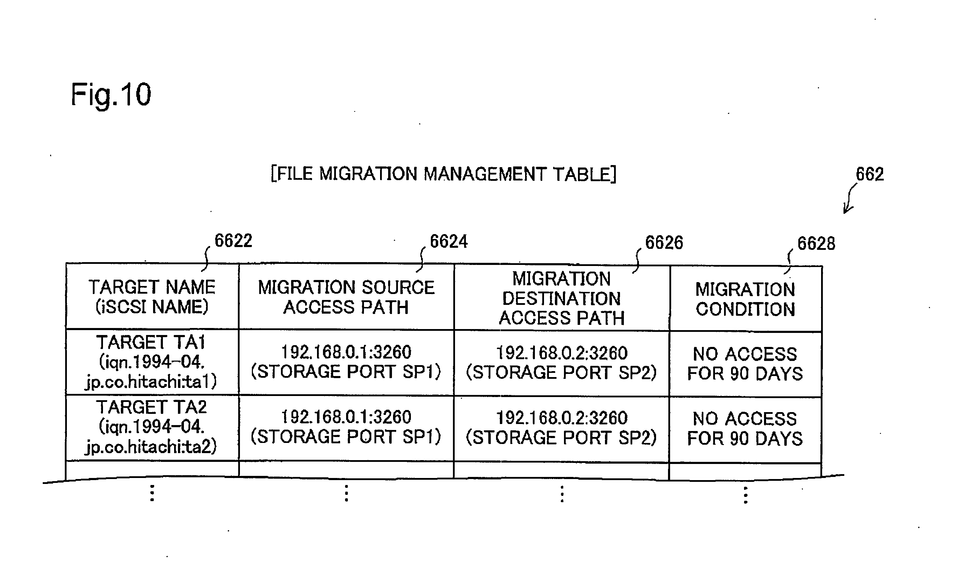

Fig. 10 is an explanatory drawing showing an example of the file migration management table 662 on the file migration device 60. The file migration management table 662 stores, as information used to manage the migration of files stored on the host computers 40, target names 6622 that each indicate the iSCSI name comprising the identifier for an iSCSI target that is to be the subject of file migration, migration source access paths 6624 that each indicate the access path used for a write command to write a file to the migration source real volume, migration destination access paths 6624 that each indicate the access path used for a write command to write a file to the migration destination real volume, and migration conditions 6628 that each indicate the condition governing the execution of file migration. In this embodiment, these access paths are indicated by a text string that combines the write command destination IP address and TCP port number using a colon.

For example, in the file migration management table 662 shown in Fig. 10, it is seen that where a file on a virtual volume corresponding to the target TA1 identified with the iSCSI name 'iqn.1994-04.jp.co.hitachi:ta1' is not accessed from the host computers 40 for a period of 90 days, the file is migrated from the real volume onto which files are written via the access path of '192.168.0.1:3260', and for which the write command destination is deemed the storage port SP1, to the real volume onto which files are written via the access path of '192.168.0.2:3260', and for which the write command destination is deemed the storage port SP2.

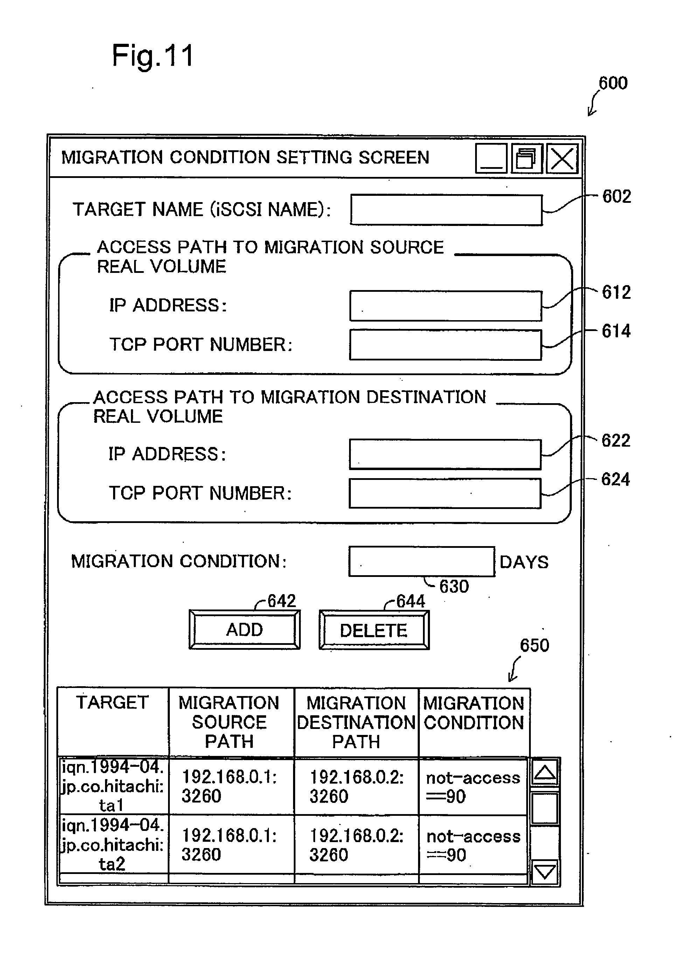

The file migration device 60 executes, as one of the processes for managing the migration of files, a migration condition setting process that configures the file migration condition. Fig. 11 is an explanatory drawing showing a migration condition setting screen 600 displayed when the migration condition setting process is executed on the file migration device 60. The migration condition setting screen 600 is a GUI screen displayed by the file migration device 60, and the file migration process table 662 is updated by the operator of the file migration device 60 operating the file migration device 60 via the migration condition setting screen 600.

The migration condition setting screen 600 has an input window 602 that receives administrator input of an iSCSI name comprising the identifier of an iSCSI target representing a file migration subject, an input window 612 that receives administrator input of the IP address used for a write command to write a file to the migration source real volume, an input window 614 that receives administrator input of the TCP port number used for a write command to write a file to the migration source real volume, an input window 622 that receives administrator input of the IP address used for a write command to write a file to the migration destination real volume, an input window 624 that receives administrator input of the TCP port number used for a write command to write a file to the migration destination real volume, an input window 630 that receives administrator input regarding the number of days of file non-access serving as the file migration condition, a button 642 that receives an instruction from the administrator to add configuration information input in the input windows 602, 612, 614, 622, 624, 630 to the file migration management table 662, a button 644 that receives an instruction from the administrator to delete configuration information input in the input windows 602, 612, 614, 622, 624, 630 from the file migration management table 662, and a display window 650 that displays the configuration status of the file migration management table 662.

### A-2. Operation of computer system 10:

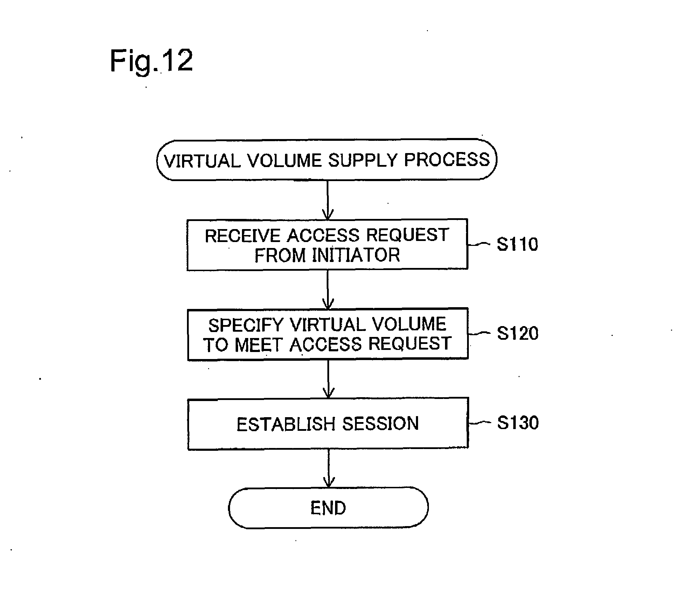

Fig. 12 is a flow chart showing a virtual volume supply process executed by the storage apparatus 20 of the computer system 10. The virtual volume supply process shown in Fig. 12 is a software-based process executed by the access controller 210 of the storage apparatus 20, and comprises a process to provide a virtual volume as an iSCSI target to a host computer 40 or to the file migration device 60 that accesses the storage apparatus 20 as an iSCSI initiator.

When the virtual volume supply process of Fig. 12 is begun, the access controller 210 of the storage apparatus 20 receives an access request from an iSCSI initiator (step S110). The access controller 210 then specifies the virtual volume corresponding to the iSCSI target received the access request with reference to the target table shown in Fig. 3 (step S120) and establishes an iSCSI session between the virtual volume specified as the iSCSI target and the iSCSI initiator (step S130). As a result, the virtual volume provided by the storage apparatus 20 is mounted by the host computer 40 or file migration device 60 serving as an iSCSI initiator.

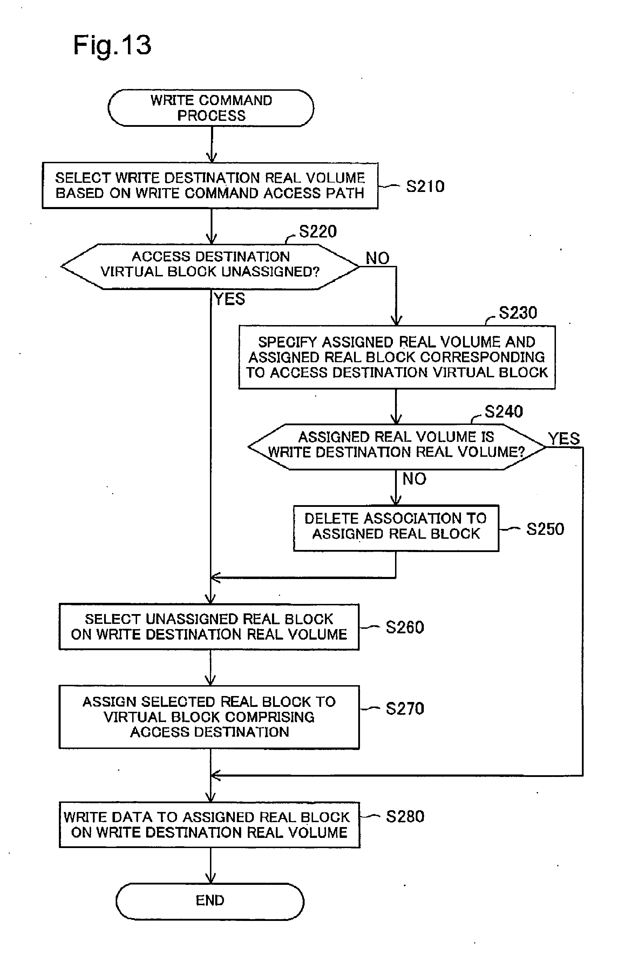

Fig. 13 is a flow chart showing a write command process executed by the storage apparatus 20 of the computer system 10. The write command process of Fig. 13 is a software-based process executed by the access controller 210 of the storage apparatus 20, and is executed in response to a write command to write a file to a virtual volume, which is issued from the host computer 40 or file migration device 60 that mount the virtual volume.

When the write command process of Fig. 13 begins in response to the write command issued by an iSCSI initiator, the access controller 210 of the storage apparatus 20 selects a write destination real volume in accordance with the access path in that write command with reference to the volume relation table shown in Fig. 4 (step S210). The access controller 210 then determines whether or not a real block has been assigned to the virtual block that is the access destination specified by the write command (step S220).

Where a real block has not been assigned to the virtual block (YES in step S220), the access controller 210 selects a real block in the 'unassigned' state from among the real blocks on the write destination real volume with reference to the unassigned block table of Fig. 6 (step S260). The access controller 210 then assigns the selected real block to the virtual block comprising the access target (step S270). The access controller 210 then write the data to the real block assigned to the virtual block that is the access destination (step S280), and thereupon ends the write command process.

Where a real block has been assigned to the virtual block, on the other hand (NO in step S220), the access controller 210 specifies the real volume and real block corresponding to the access destination virtual block with reference to the mapping table of Fig. 5 (step S230). The access controller 210 then determines in step S240 whether or not the real volume selected in accordance with the access path (in step S210) matches the real volume already assigned to the virtual block (in step S230).

Where the real volumes match (YES in step S240), the access controller 210 writes the data to the real block that was already assigned to the virtual block (step S280), and thereupon ends the write command process.

Where the real volumes do not match (NO in step S240), after the association on the real volume and the real block already assigned to the virtual block is deleted (step S250), the access controller 210 selects an 'unassigned' real block from among the real blocks on the write destination real volume with reference to the unassigned block table in Fig. 6 (step S260). The access controller 210 then assigns the newly selected real block to the virtual block that is the access destination (step S270). The access controller 210 then write the data to the real block newly assigned to the access destination real block (step S280), and thereupon ends the write command process.

In this embodiment, files are deleted from virtual volumes using a write command and are also deleted from real volumes via the write command process of Fig. 13. The write command in this case is a command that specifies a virtual block on a virtual volume and makes the specified virtual block a free area that is not being used for data storage, i.e., a so-called 'free block'.

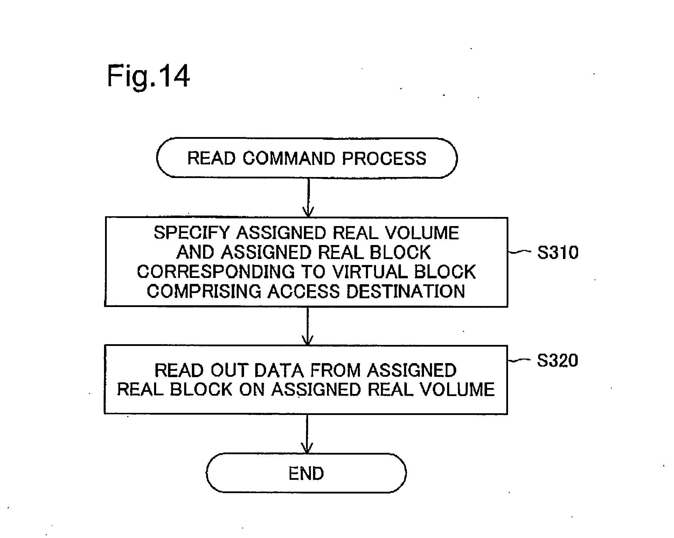

Fig. 14 is a flow chart showing a read command process executed by the storage apparatus 20 of the computer system 10. The read command process of Fig. 14 is a software-based process executed by the access controller 210 of the storage apparatus 20, and is a process that is performed in response to a read command to read a file from a virtual volume, which is issued from a host computer 40 or file migration device 60 that mount the virtual volume.

When the read command process is begun in response to a read command issued from an iSCSI initiator, the access controller 210 of the storage apparatus 20 specifies a real block on a real volume corresponding to the virtual block that is the access destination designated in the read command with reference to the mapping table in Fig. 5 (step S310). The access controller 210 then reads the data from the specified real block on the specified real volume (step S320), whereupon the read command process ends.

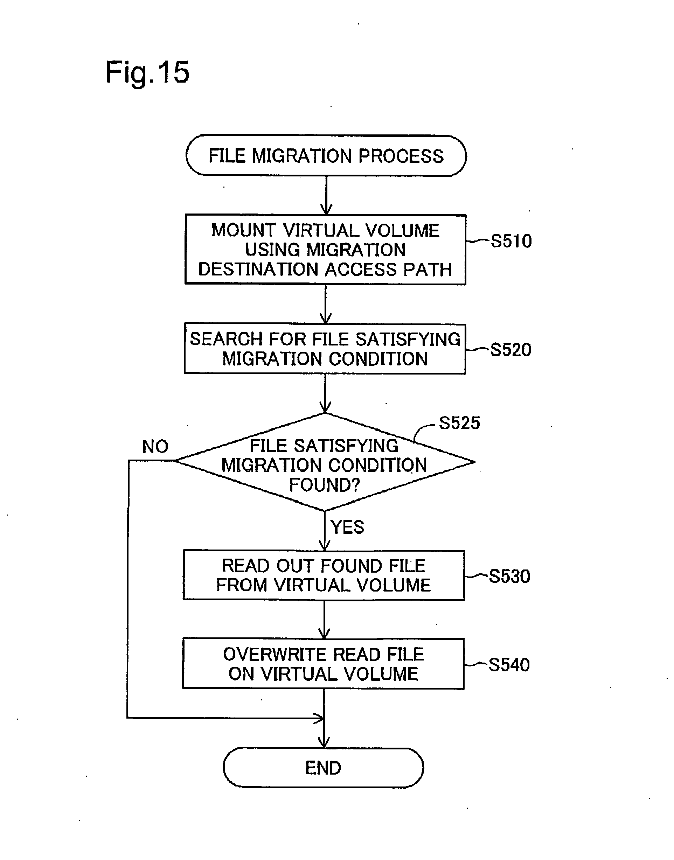

Fig. 15 is a flow chart showing a file migration process executed by the file migration device 60 of the computer system 10. The file migration process of Fig. 15 is a software-based process executed by the file migration device 60, and carries out file migration between real volumes of the storage apparatus 20. In this embodiment, the file migration device 60 begins the file migration process of Fig. 15 after confirming with the host management device 50 that the host computers 40 have logged off from the storage apparatus 20.

When the file migration process of Fig. 15 begins, the file migration device 60 accesses the storage apparatus 20 using the migration destination access path 6626 set in the file migration management table 662 of Fig. 10 and mounts the virtual volume (step S510). The file migration device 60 then searches for all files satisfying the migration condition 6628 by referring to the last access time for each file stored on the virtual volume (step S520). If no files satisfying the migration condition 6628 are found as a result of the search (NO in step S525), the file migration device 60 ends the file migration process.

If the search does result in the discovery of a file that satisfies the search condition 6628, on the other hand (YES in step S525), the file migration device 60 reads out the found file from the virtual volume using a read command (step S530) and overwrites the read file to the virtual volume using a write command (step S540). The file migration device 60 then ends the file migration process.

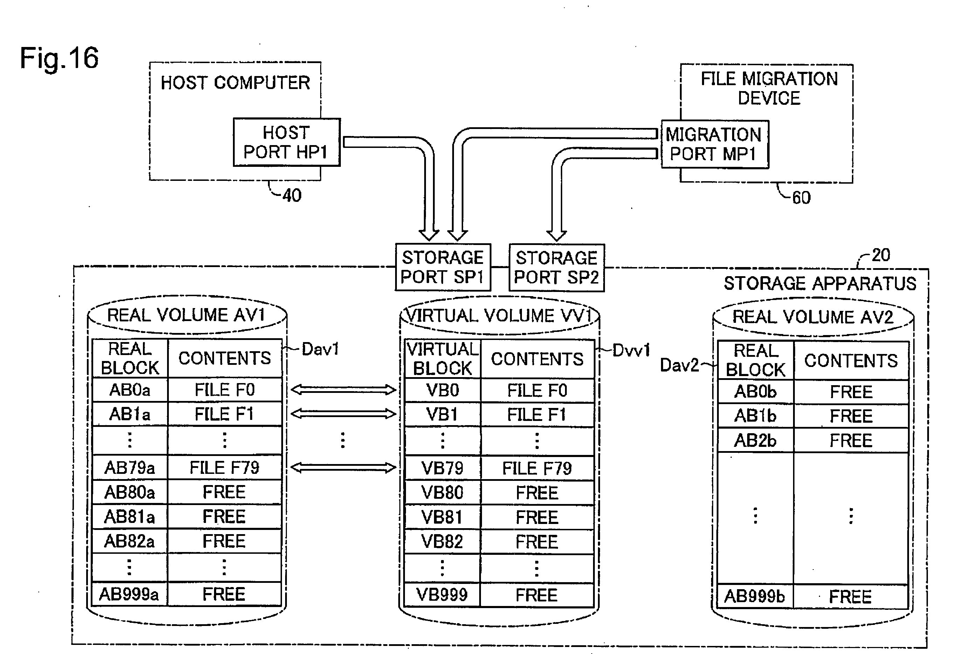

Fig. 16 is an explanatory drawing showing the associations between the virtual volume VV1 and the real volumes AV1, AV2. The volume associations shown in Fig. 16 reflect the contents of the mapping table of Fig. 5 and the unassigned block table of Fig. 6. The virtual directory Dvv1 indicates the storage of files on the virtual volume VV1, the real directory Dav1 indicates the storage of files on the real volume AV1, and the real directory Dav2 indicates the storage of files on the real volume AV2.

In the virtual directory Dvv1 of Fig. 16, the virtual blocks VB0-VB79 in which the files F0-F79 are respectively stored are respectively associated with the real blocks AB0a-AB79a on the real volume AV1, while the virtual blocks VB80-VB999 are free blocks. In the real directory Dav1 of Fig. 16, the real blocks AB0a-AB79a respectively store the files F0-F79, while the real blocks AB80a-AB999a are free blocks. In the real directory Dav2 of Fig. 16, the real blocks AB0b-AB999b are free blocks.

In this Specification, for purposes of simplification, the discussions of the virtual directory Dvv1 and real directories Dav1, Dav2 describe the handling only of blocks that store files, but in actuality, blocks that store 'i-node' information, including file-related information such as the file's owner, size, last revision time, last access time, time of most recent change in attributes and the like, are treated in the same manner together with file blocks.

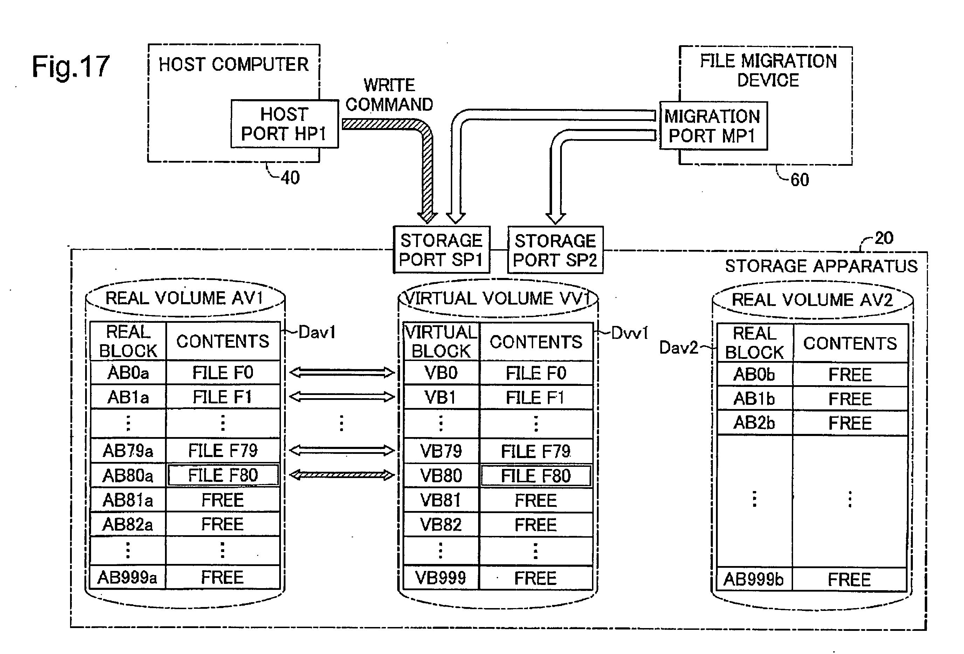

Fig. 17 is an explanatory drawing showing volume associations after the execution of a write command issued from a host computer 40 to the storage apparatus 20 in the state shown in Fig. 16. The write command from the host computer 40 shown in Fig. 17 is an instruction directing that a file F80 be newly written to the virtual block VB80 on the virtual volume VV1. The source of the write command is the host port HP1 and the recipient of the write command is the storage port SP1. Through the write command process shown in Fig. 13, the virtual block VB80 on the virtual volume VV1 is associated with the real block AB80a on the real volume AV1, and the file F80 is written to the real block AB80a (steps S210, S220, S260, S270, S280). As a result, both the virtual block VB80 in the virtual directory Dvv1 and the real block AB80a in the real directory Dav1 come to store the file F80.

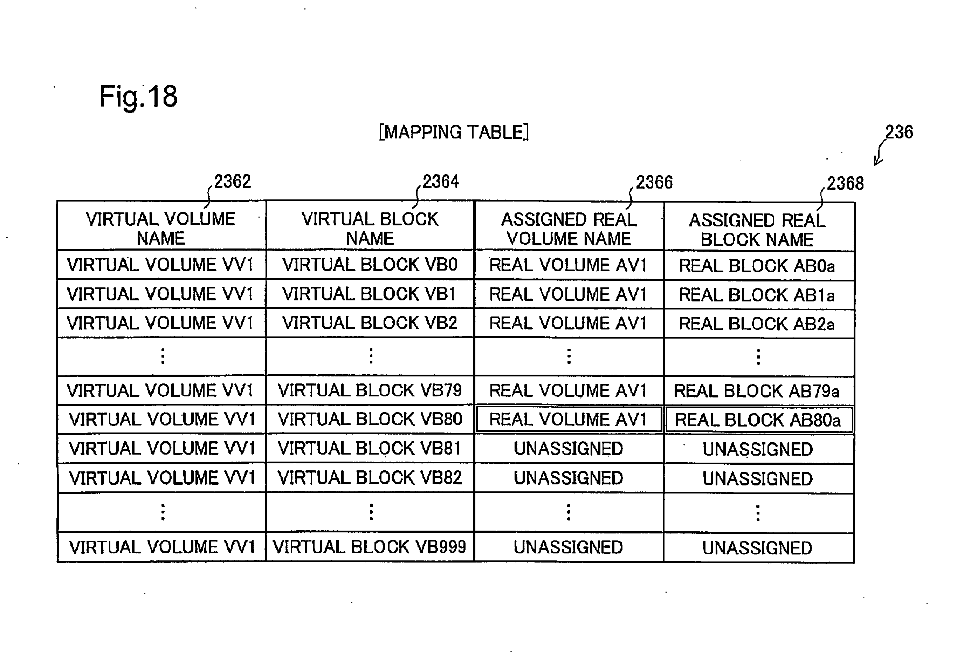

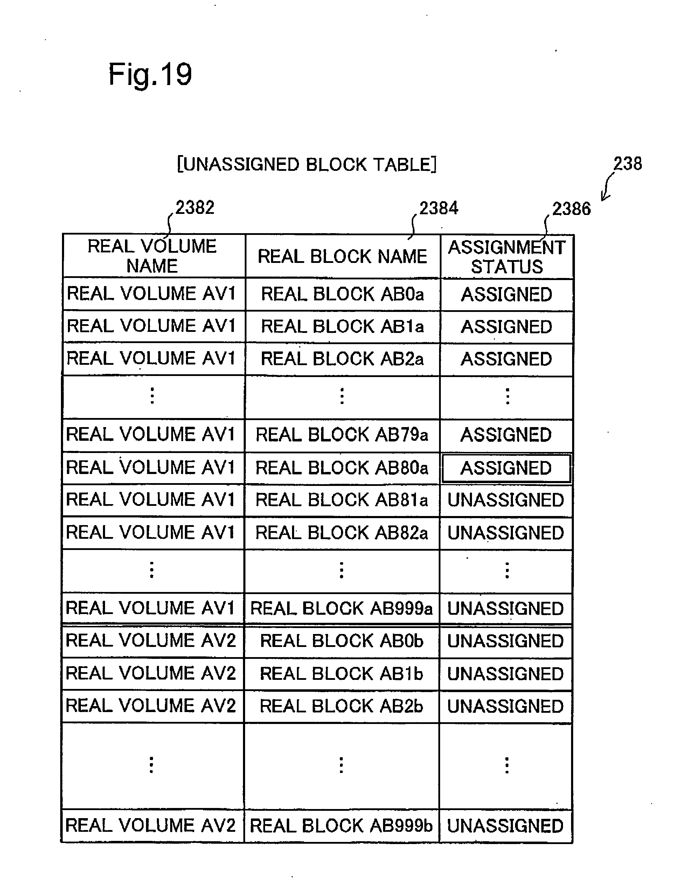

Fig. 18 is an explanatory drawing showing the mapping table 236 in the situation shown in Fig. 17. The mapping table 236 of Fig. 18 shows the association between the virtual block VB80 on the virtual volume VV1 and the real block AB80a on the real volume AV1. Fig. 19 is an explanatory drawing showing the unassigned block table 238 in the situation shown in Fig. 17. The unassigned block table 238 of Fig. 19 shows that the real block AB80a on the real volume AV1 is in the 'assigned' state.

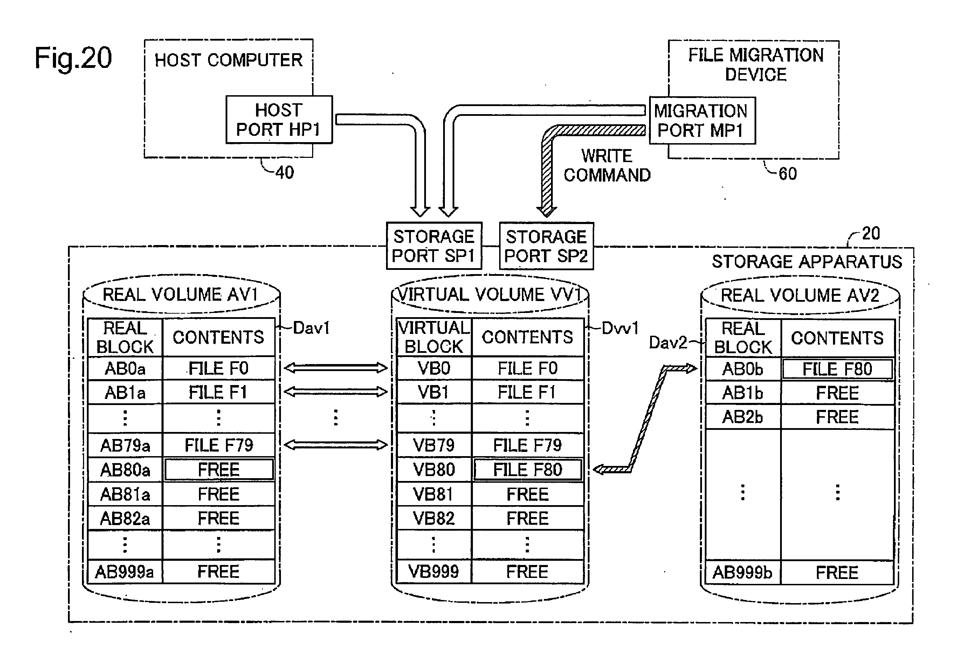

Fig. 20 is an explanatory drawing showing the associations between volumes following the execution of a write command issued by the file migration device 60 to the storage apparatus 20 in the state shown in Fig. 17. The write command issued by the file migration device 60 shown in Fig. 20 instructs that the file F80 be overwritten in order to migrate it from the real volume AV1 to the real volume AV2 (step S540). The source of the write command is the migration port MP1, and the recipient of the write command is the storage port SP2. As a result of the write command process shown in Fig. 13, the association between the virtual block VB80 on the virtual volume VV1 and the real block AB80a on the real volume AV1 is deleted, the virtual block VB80 on the virtual volume VV1 becomes associated with the real block AB80b on the real volume AV2, and the file F80 is written to the real block AB80b (steps S210, S220, S230, S240, S250, S260, S270, S280). Consequently, the virtual block VB80 in the virtual directory Dvv1 continues to store the file F80 as before, the real block AB80 in the real directory Dav1 becomes a free block, and the real block AB0b in the real directory Dav2 comes to store the file F80.

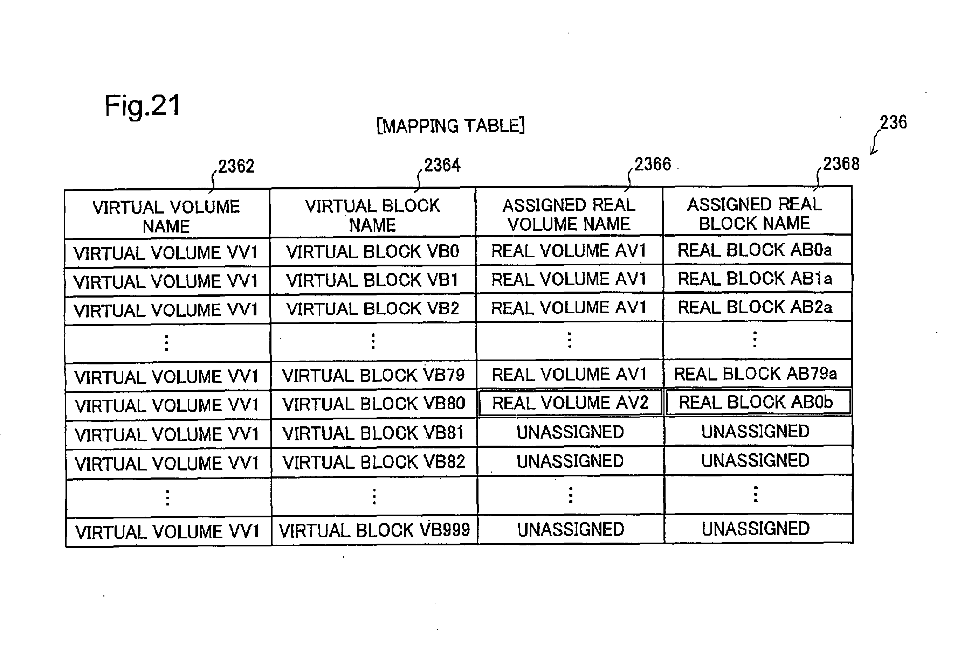

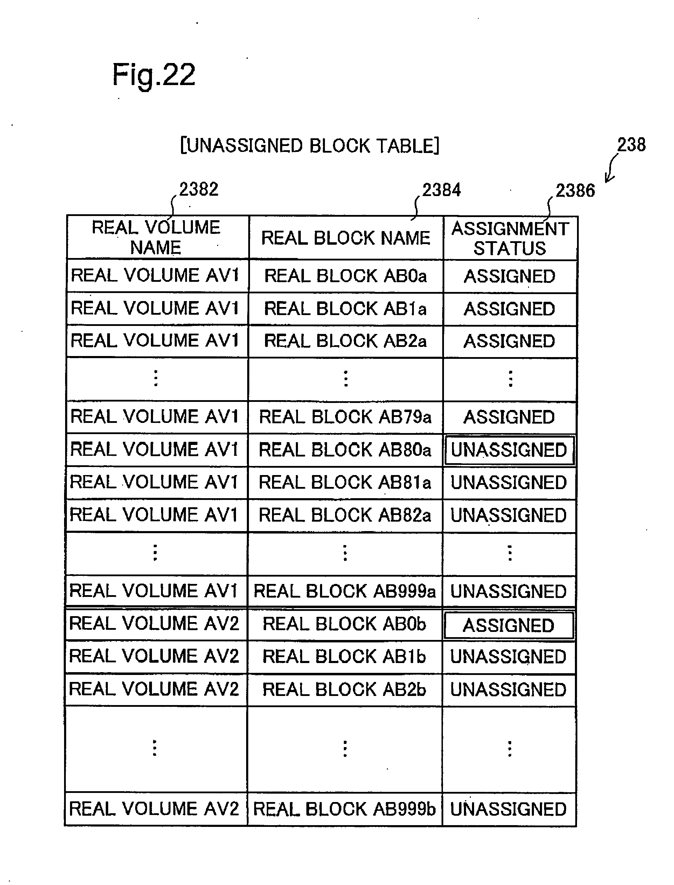

Fig. 21 is an explanatory drawing showing the mapping table 236 in the situation shown in Fig. 20. The mapping table 236 of Fig. 21 shows that the real block AB0b on the real volume AV2 is associated with the virtual block VB80 on the virtual volume VV1. Fig. 22 is an explanatory drawing showing the unassigned block table 238 in the state shown in Fig. 20. In the unassigned block table 238 of Fig. 22, it is seen that the real block AB80a on the real volume AV1 is in the 'unassigned' state and that the real block AB0b on the real volume AV2 is in the 'assigned' state.

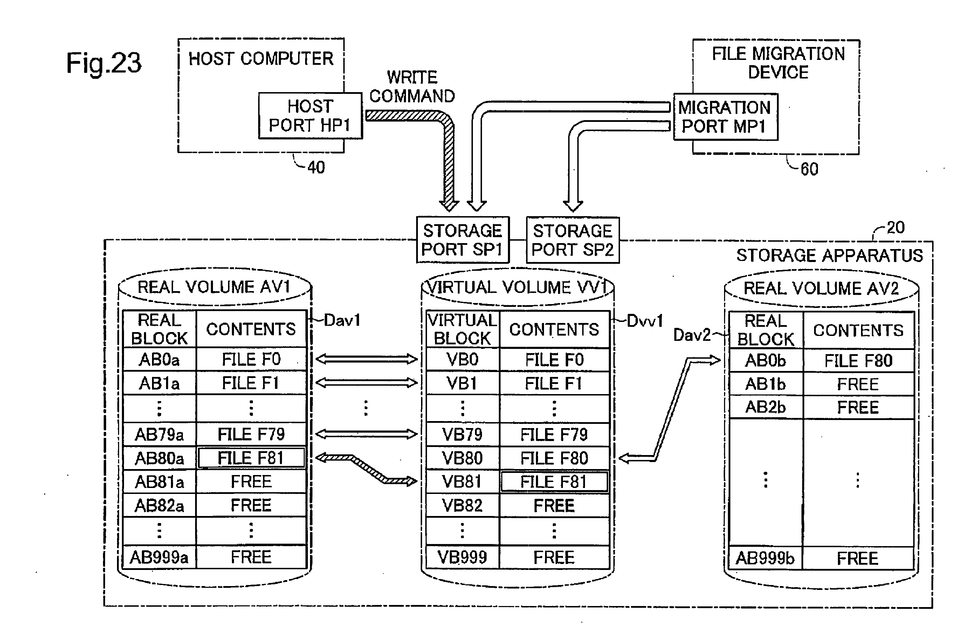

Fig. 23 is an explanatory drawing showing the associations between volumes following the execution of a write command issued by a host computer 40 to the storage apparatus 20 in the state shown in Fig. 20. The write command issued by the host computer 40 shown in Fig. 23 instructs that a file F81 be newly written to the virtual block VB81 on the virtual volume VV1. The source of the write command is the host port HP1, while the recipient of the write command is the storage port SP1. As a result of the write command process shown in Fig. 13, the virtual block VB81 on the virtual volume VV1 becomes associated with the real block AB80a on the real volume AV1 and the file F81 is written to the real block AB80a (steps S210, S220, S260, S270, S280). Consequently, both the virtual block VB81 in the virtual directory Dvv1 and the real block AB80a in the real directory Dav1 come to store the file F81.

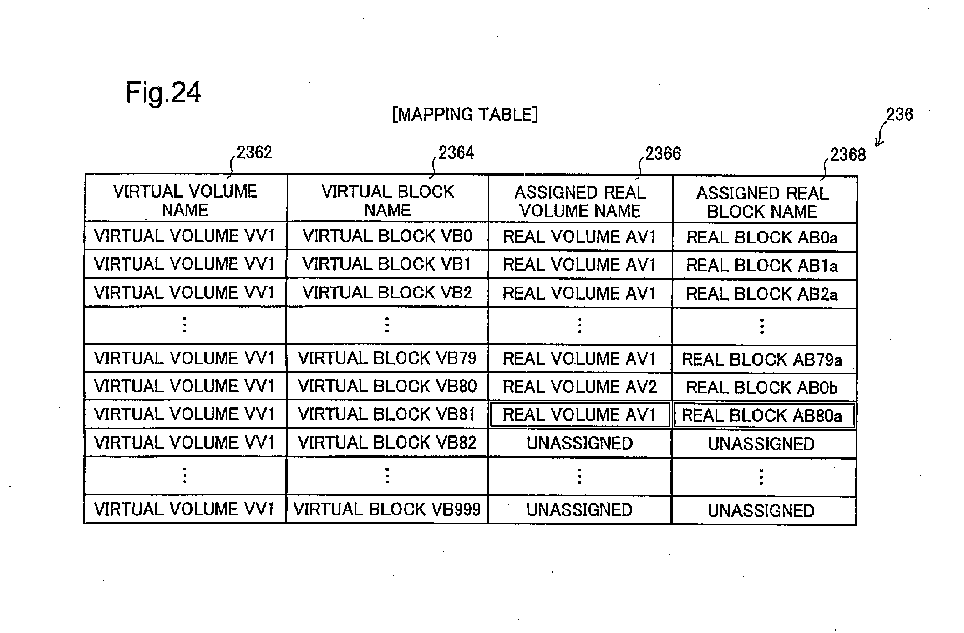

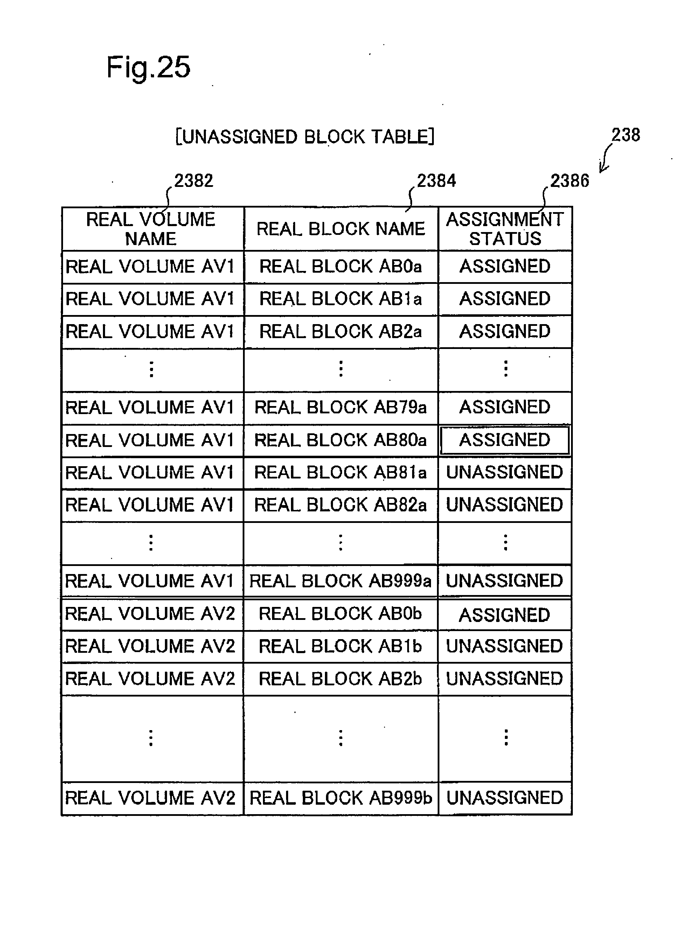

Fig. 24 is an explanatory drawing showing the mapping table 236 in the situation shown in Fig. 23. The mapping table 236 of Fig. 24 shows that the real block AB80a on the real volume AV1 is associated with the virtual block VB81 on the virtual volume W1. Fig. 25 is an explanatory drawing showing the unassigned block table 238 in the situation shown in Fig. 23. In the unassigned block table 238 of Fig. 25, it is seen that the real block AB80a on the real volume AV1 is in the 'assigned' state.

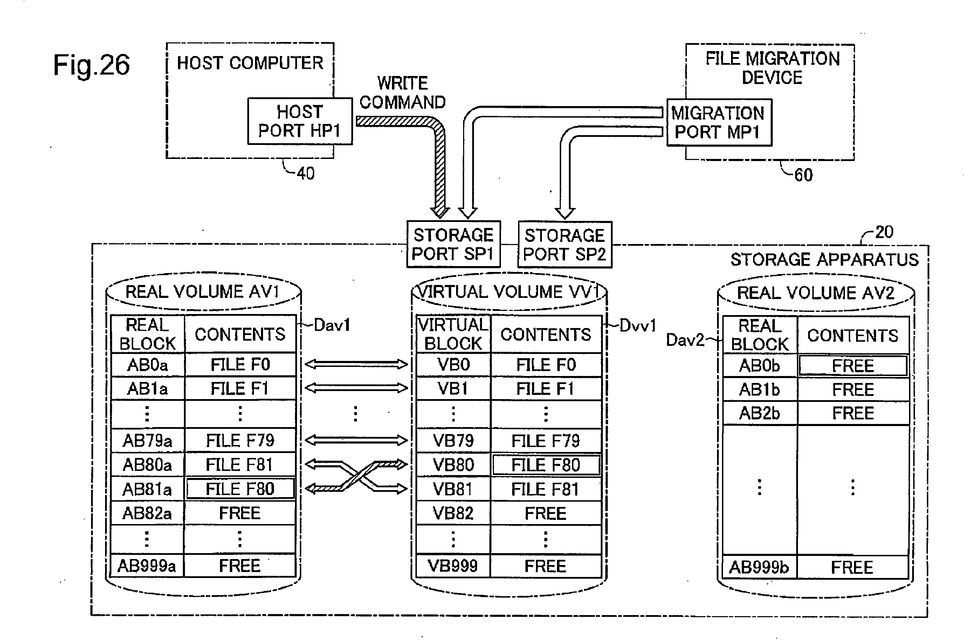

Fig. 26 is an explanatory drawing showing the associations between volumes following the execution of a write command issued by a host computer 40 to the storage apparatus 20 in the state shown in Fig. 23. The write command issued by the host computer 40 shown in Fig. 26 instructs that the file F80 be overwritten on the virtual block VB80 on the virtual volume VV1. The source of the write command is the host port HP1, while the recipient of the write command is the storage port SP1. The file F80 comprising the overwriting file is the file migrated from the real volume AV1 to the real volume AV2 by the file migration device 60 (see Fig. 20). As a result of the write command process shown in Fig. 13, the association between the virtual block VB80 on the virtual volume VV1 and the real block AB80b on the real volume AV2 is deleted, the virtual block VB80 becomes associated with the real block AB81a on the real volume AV1, and the file F80 is written to the real block AB81a (steps S210, S220, S230, S240, S250, S260, S270, S280). Consequently, The virtual block VB80 in the virtual directory Dvv1 continues to store the file F80 as before, the real block AB81a in the real directory Dav1 also comes to store the file F80, and the real block AB80b in the real directory Dav2 becomes a free block.

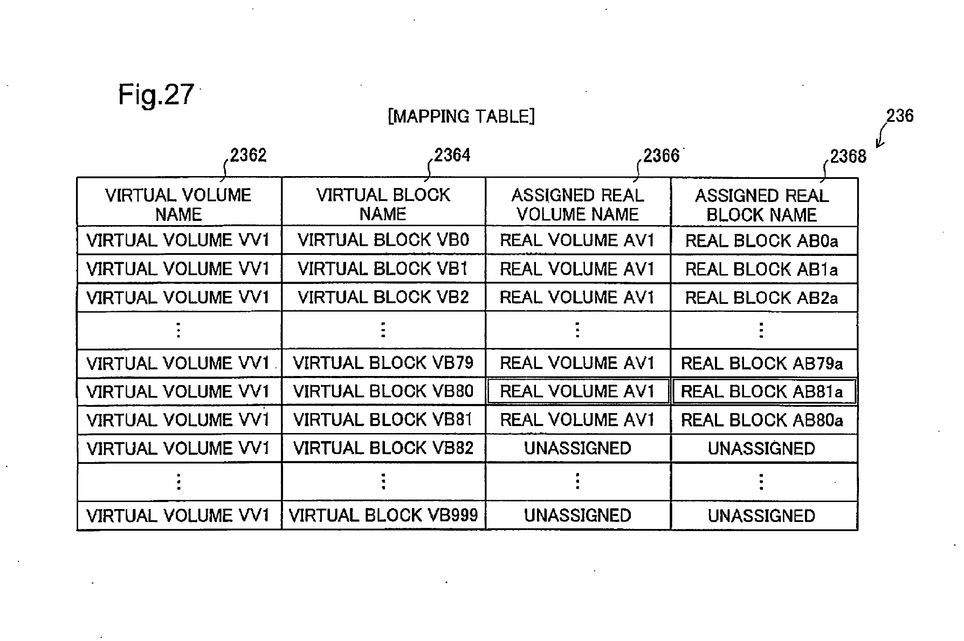

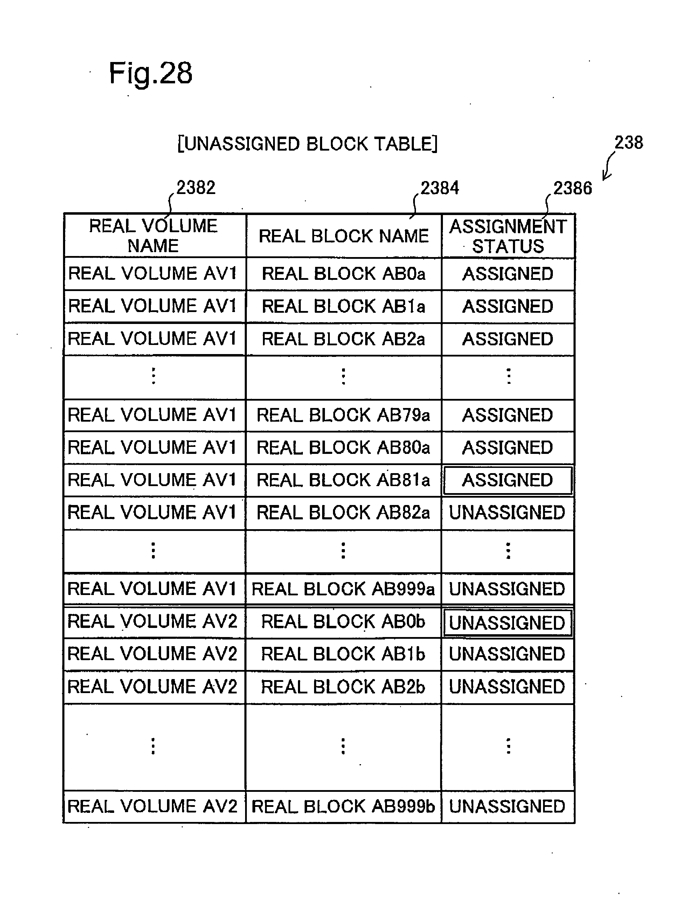

Fig. 27 is an explanatory drawing showing the mapping table 236 in the situation shown in Fig. 26. The mapping table 236 of Fig. 27 shows that the real block AB81a on the virtual volume AV1 is associated with the virtual block VB80 on the virtual volume VV1. Fig. 28 is an explanatory drawing showing the unassigned block table 238 in the situation shown in Fig. 26. In the unassigned block table 238 of Fig. 28, it is seen that the real block AB81a on the real volume AV1 is in the 'assigned' state, while the real block AB0b on the real volume AV2 is in the 'unassigned' state.

According to the computer system 10 of the first embodiment described above, a file can be written to the proper real volume AV1 or AV2 through the issuance of a write command pertaining to the virtual volume VV1 without changing the access command structure. Furthermore, the file can be read from the real volume associated to the virtual volume during file writing regardless of which of the real volumes AV1, AV2 the file is stored on. Furthermore, where file migration between the real volumes AV1, AV2 is carried out through the issuance of a write command pertaining to the virtual volume VV1, because the migrated file continues to exist on the virtual volume VV1 before and after migration, smooth access to the migrated file by a host computer 40 can be ensured.

### B. Second embodiment:

The computer system 10 of a second embodiment is identical to the computer system 10 of the first embodiment, except for that the file migration process executed by the file migration device 60 differs between the two embodiments.

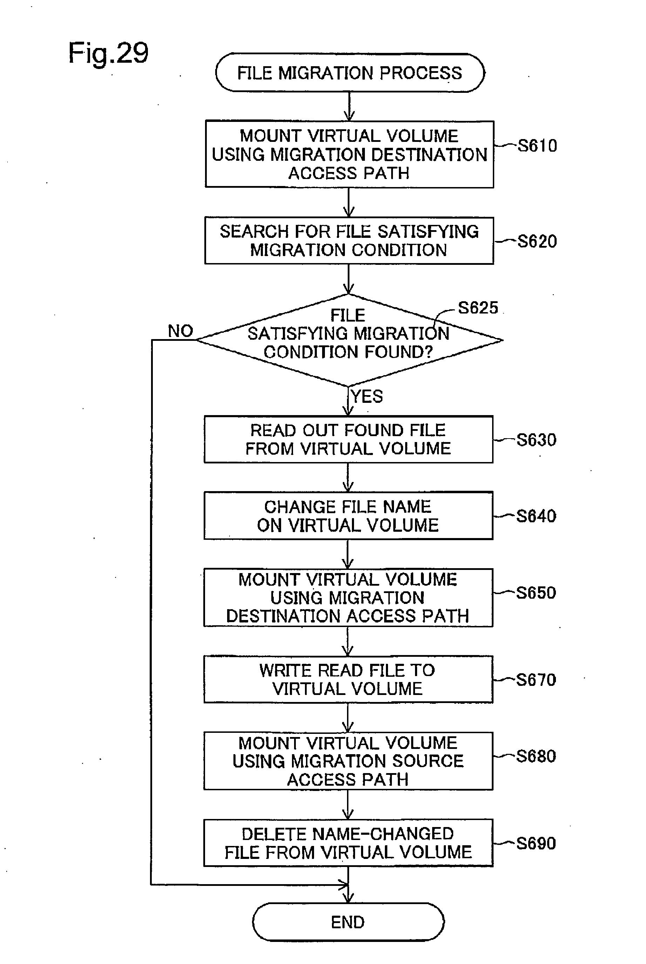

Fig. 29 is a flow chart of the file migration process executed by the file migration device 60 of the computer system 10 of the second embodiment. The file migration process of Fig. 29 is a software-based process executed by the file migration device 60, and carries out file migration between real volumes of the storage apparatus 20. In this embodiment, the file migration device 60 begins the file migration process shown in Fig. 29 after it confirms with the host management device 50 that the host computers 40 have logged off of the storage apparatus 20.

When the file migration process shown in Fig. 29 begins, the file migration device 60 accesses the storage apparatus 20 using the migration source access path 6624 set in the file migration management table 662 of Fig. 10 and mounts the virtual volume (step S610). The file migration device 60 then searches for all files satisfying the migration condition 6628 by referring to the last access time for each file stored on the virtual volume (step S620). If no files satisfying the migration condition 6628 are found as a result of the search (NO in step S625), the file migration device 60 ends the file migration process.

If the search does result in the discovery of a file that satisfies the search condition 6628, on the other hand (YES in step S625), the file migration device 60 reads out the found file from the virtual volume using a read command (step S630) and changes the file name of the file found on the virtual volume (step S640).

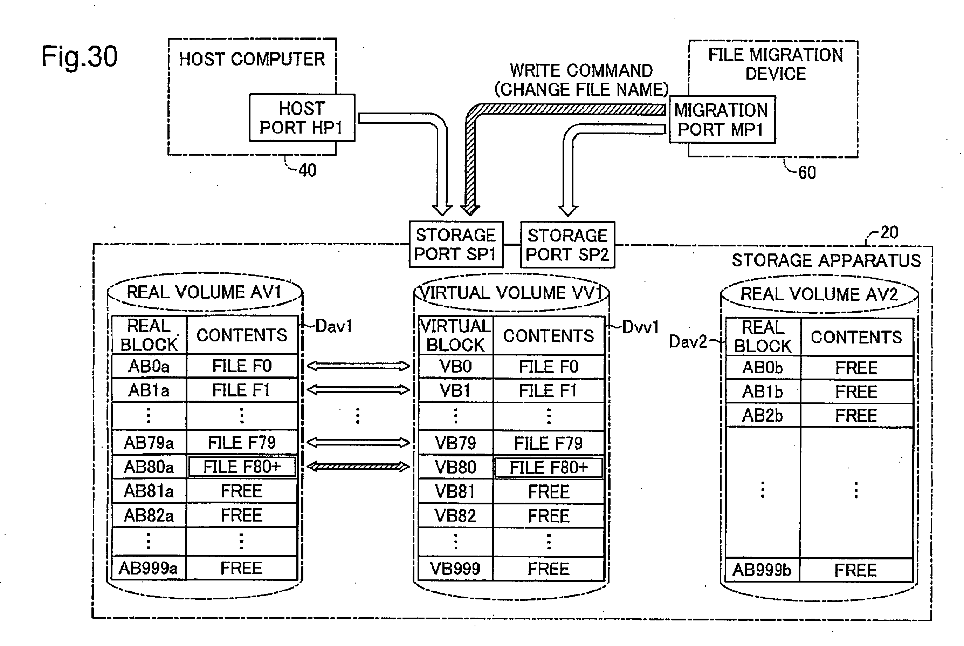

Fig. 30 is an explanatory drawing showing the associations among volumes after execution of a write command to change the file name that was issued by the file migration device 60 to the storage apparatus 20 in the state shown in Fig. 17. The write command sent by the file migration device 60 in Fig. 30 instructs the storage apparatus 20 to change the file name of the file F80 stored on the virtual block VB80 on the virtual volume VV1 to 'F80+' based on the file migration process shown in Fig. 29 (step S640). As a result, both the virtual block VB80 in the virtual directory Dvv1 and the real block AB80 in the real directory Dav1 come to store the file F80+.

Returning to Fig. 29, after the file name is changed (step S640), the file migration device 60 accesses the storage apparatus 20 using the migration destination access path 6626 set in the file migration management table 662 of Fig. 10 and mounts the virtual volume (step S650). The file migration device 60 then uses a write command to write the read-out file to the virtual volume using the original file name (step S670).

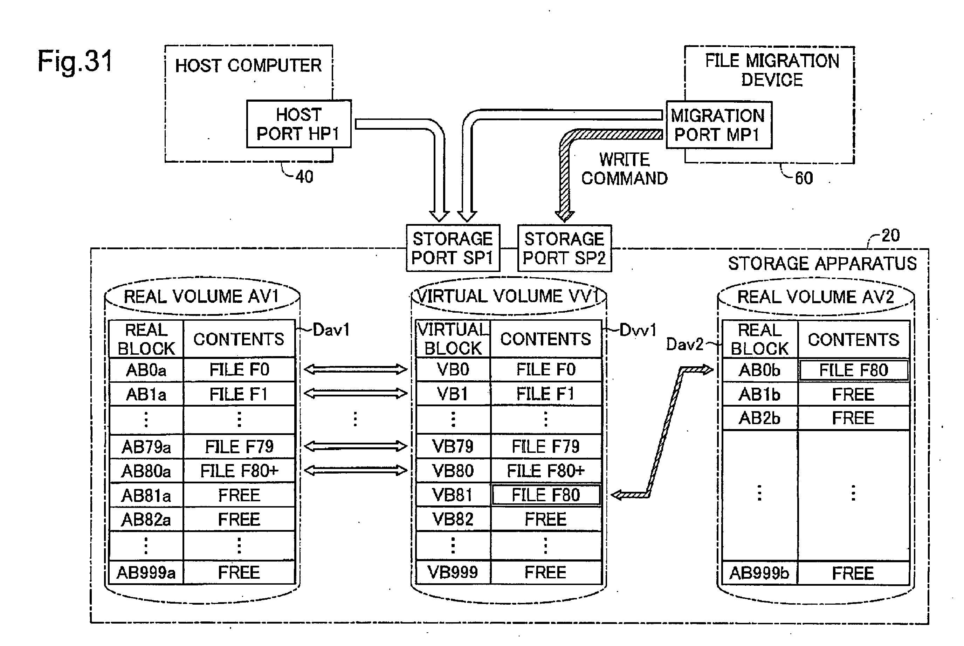

Fig. 31 is an explanatory drawing showing the associations between volumes following execution of a write command issued by the file migration device 60 to the storage apparatus 20 in the state shown in Fig. 30. The write command issued by the file migration device 60 of Fig. 31 instructs that the storage apparatus 20 write the file F80 to the virtual block VB81 on the virtual volume VV1 using the original file name based on the file migration process shown in Fig. 29 (step S670). The source of the write command is the migration port MP1, while the recipient of the write command is the storage port SP2. As a result of the write command process shown in Fig. 13, the virtual block VB81 on the virtual volume VV1 becomes associated with the real block AB0b on the real volume AV2 and the file F80 is written to the real block AB0b (steps S210, S220, S260, S270, S280). Consequently, both the virtual block VB81 in the virtual directory Dvv1 and the real block AB0b in the real directory Dav 2 come to store the file F80.

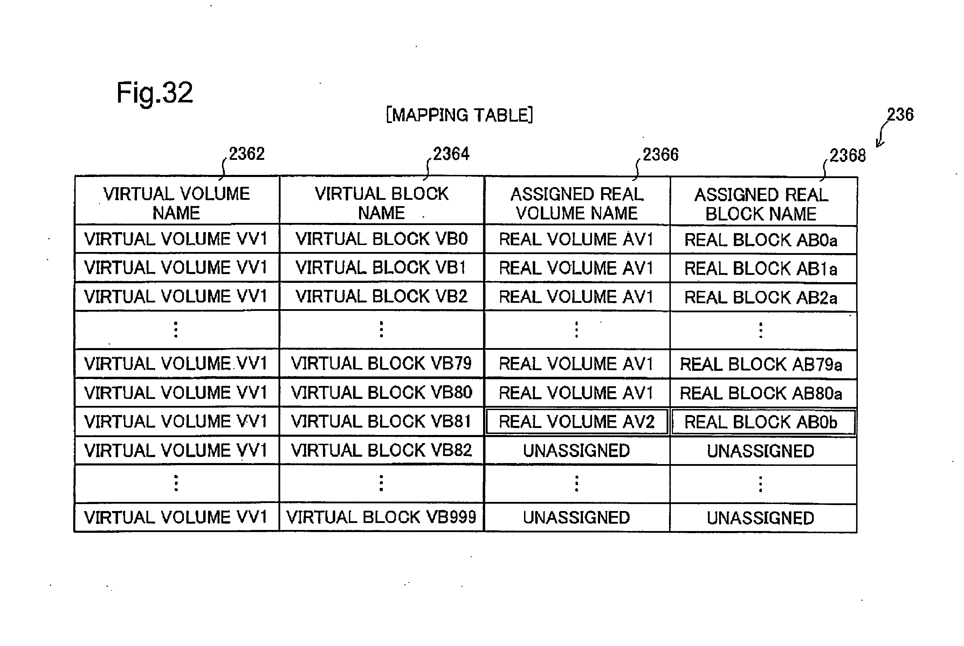

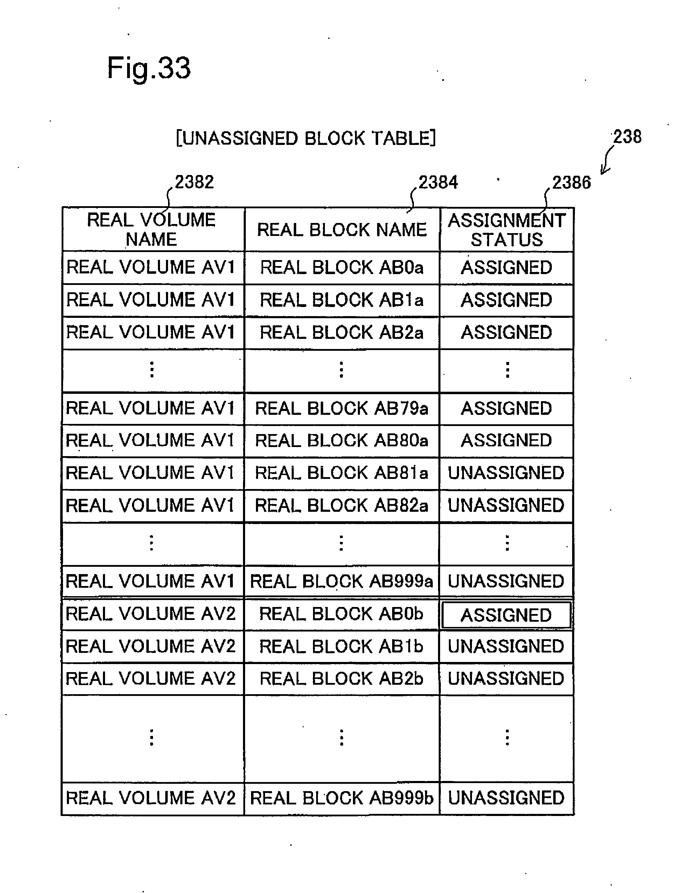

Fig. 32 is an explanatory drawing showing the mapping table 236 in the situation shown in Fig. 31. In the mapping table 236 of Fig. 32, the real block AB0b on the real volume AV2 is associated with the virtual block VB81 on the virtual volume VV1. Fig. 33 is an explanatory drawing showing the unassigned block table 238 in the situation shown in Fig. 31. The unassigned block table of Fig. 33 shows that the real block AB0b on the real volume AV2 is in the 'assigned' state.

Returning to Fig. 29, after the read-out file is written to the virtual volume under the original file name (step S670), the file migration device 60 accesses the storage apparatus 20 using the migration source access path 6624 set in the file migration management table 662 of Fig. 10 and mounts the virtual volume (step S680). The file migration device 60 then deletes the file whose name was changed from the virtual volume using a write command (step S690) and ends the file migration process.

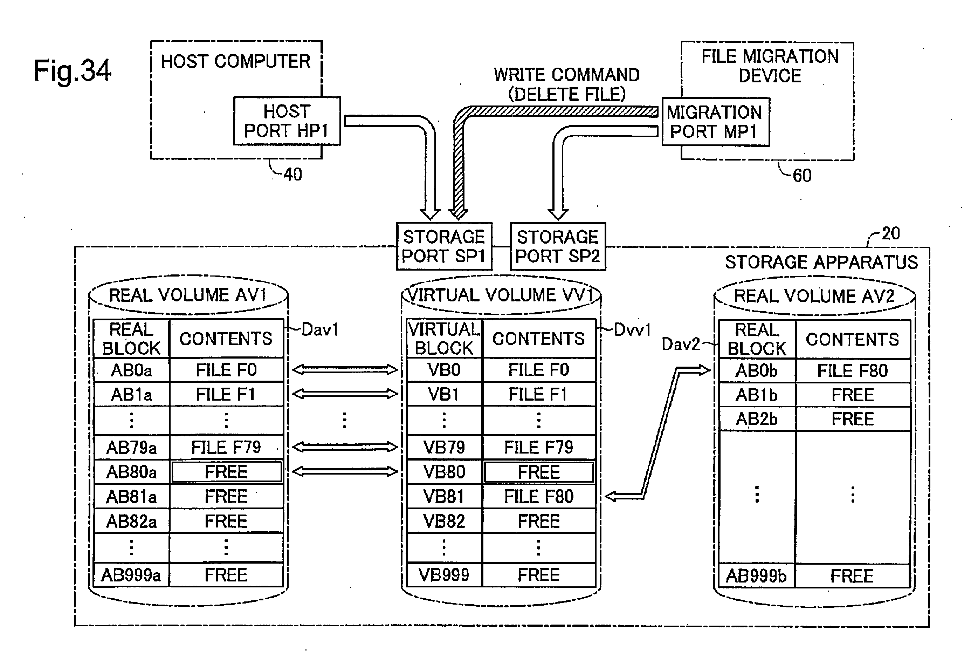

Fig. 34 is an explanatory drawing showing the associations between volumes following the execution of a write command issued by the file migration device 60 to the storage apparatus 20 instructing the deletion of a file in the state shown in Fig. 31. The write command issued by the file migration device 60 in Fig. 34 is an instruction to delete the file F80+ from the virtual volume VV1 based on the file migration process shown in Fig. 29 (step S690). The write command source is the migration port MP1, while the write command recipient is the storage port SP1. As a result of the write command process shown in Fig. 13, both the virtual block VB80 in the virtual directory Dvv1 and the real block AB80a in the real directory Dav1 become free blocks.

According to the computer system 10 of the second embodiment described above, as in the first embodiment, smooth access to a migrated file by a host computer 40 can be ensured, and because the migration source file is deleted after the target file is securely migrated to the migration destination, secure file migration can be carried out.

### C. Third embodiment:

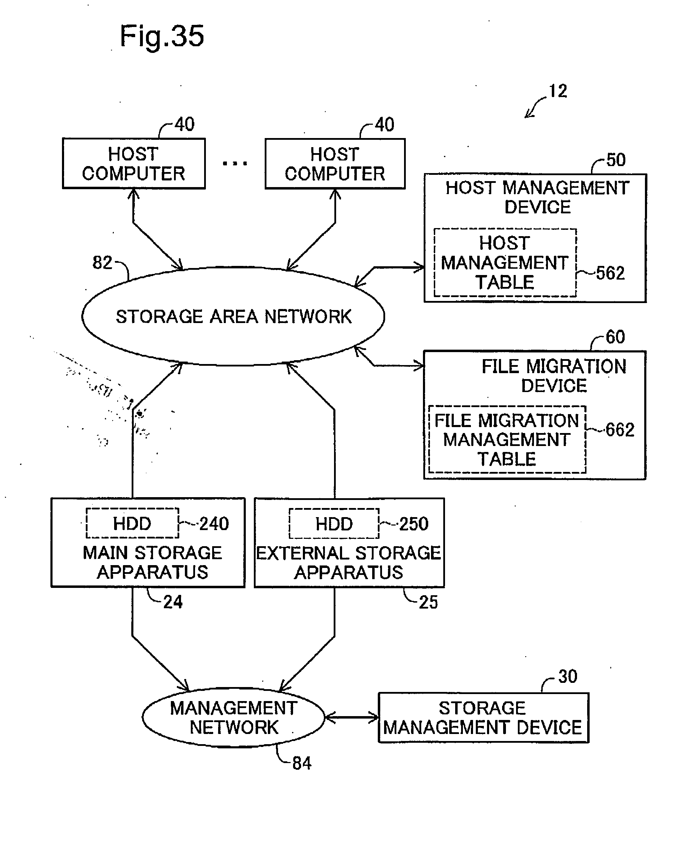

Fig. 35 is a block diagram showing the basic configuration of a computer system 12 pertaining to a third embodiment. The computer system 12 of the third embodiment is identical to the computer system 10 of the first embodiment except for that it includes in place of the storage apparatus 20 of the first embodiment a main storage apparatus 24 and an external storage apparatus 25.

The configuration of the third embodiment differs from that of the first embodiment only in that (i) a HDD 240 comprising a migration source real volume is disposed in the main storage apparatus 24, while a HDD 250 comprising a migration destination real volume is disposed in the external storage apparatus 25, (ii) the main storage apparatus 24 receives read and write commands by establishing sessions with a host computer 40 or the file migration device 60, as well as reads and writes data to and from the real volume on the HDD 250 through iSCSI communication with the external storage apparatus 25 via the storage area network 82. As a result, where a file is migrated between the main storage apparatus 24 and the external storage apparatus 25 that are interconnected via the storage area network 82, smooth access to the file by the host computers 40 both before and after file migration can be ensured.

### D. Other embodiments:

While embodiments of the invention were described above, the present is not limited to such embodiments, and may naturally be realized in various forms within its essential scope as described in the Claims. For example, in the above embodiments, the storage apparatus 20 and the storage management device 30 are connected over a management network 84 that is different from the storage area network 82, but the storage apparatus 20 and the storage management device 30 may be connected over the storage area network 82. Furthermore, the IP network comprising the storage area network 82 or the management network 84 may consist of a wired or wireless network. In addition, the system configuration of the computer system 10 is not limited to that of a storage-centric system, and various other types of systems, such as a SAN (Storage Area Network), NAS (Network Attached Storage) or a mainframe system, may be employed.

At least one of the HDDs 240, 250 incorporated in the storage apparatus 20 may consist of a DVD drive that drives a DVD (Digital Versatile Disc) or other storage apparatus. In the above embodiments, while the HDDs 240, 250 may have the same specifications, the standard used to govern data transfer thereto and therefrom is not limited to the fiber-channel or SATA standard. At least one of the real volumes on the HDDs 240, 250 may utilize RAID technology.

In the above embodiments, the real volume comprising the file writing destination is selected based on a combination of the source and the destination of the write command, but such volume may be selected based on either the write command source or destination individually.

In the above embodiments, the migration condition governing file migration between volumes consisted of the number of days that a file was not accessed by a host computer 40, but the migration condition may consist of the number of days since the file was last updated, and the determination as to whether to migrate a file may be made based on the file type (i.e., the file extension). Furthermore, file migration need not be performed on a file-by-file basis, but rather on a folder-by-folder basis.

In the above embodiments, assignment of real blocks to virtual blocks is carried out in sequence in ascending order of the serial numbers of the real blocks, but such assignment may be carried out in descending order or randomly, and in the case of a file that spans multiple blocks, the real blocks may be assigned taking into account block continuity.

In the above embodiments, the virtual volume VV1 and the real volumes AV1, AV2 had the same storage capacity, but it is acceptable if the storage capacity of the virtual volume be set to a multiple N (N being a natural number) of the storage capacity of the migration source or migration destination real volume, such that where too few real blocks are assigned to a virtual block, a new real block is added.

Moreover, the storage apparatus 20 may migrate data between the real volumes based on an instruction from the file migration device 60. For example, it is acceptable if, where a text command is transmitted that is based on the iSCSI protocol and includes the name of the virtual volume, the name of the virtual block comprising the migration subject and the name of the real volume comprising the migration destination, the storage apparatus 20, based on the contents of the received text command, (i) changes the associations among the virtual volume and real blocks and among the virtual block and real blocks and (ii) writes the data to the migration destination real block.

All changes within the meaning and range of equivalency of the claims are intended to be embraced therein. The scope and sprit of the present invention are indicated by the appended claims, rather than by the foregoing description.

## Claims

1. A computer system (10) including a file device (40, 60) that handles a file and a storage apparatus (20) that stores the file,
the computer system comprising:
first and second real volumes (AV1, AV2) that have physical storage areas, wherein the storage apparatus contains the first and second real volumes;
a virtual volume provider (212) that provides a virtual volume (VV1) having virtual storage areas to the file device;
a real volume selector (214) that, when a write command for writing the file to the virtual volume is transmitted from the file device to the storage apparatus, selects one of the first and second real volumes based on an access path over which the write command is transmitted;
a relation manager (216) that relates a virtual storage area on the virtual volume specified in the write command to a physical storage area on the selected real volume; and
a write executor (218) that writes the file specified in the write command to the related physical storage area.

2. The computer system according to claim 1, the computer system further comprising a read executor (219) that, when a read command for reading the file from the virtual volume is transmitted from the file device to the storage apparatus, reads the file specified in the read command from the physical storage area related to the virtual storage area specified in the read command.

3. The computer system according to any one of claims 1 and 2, the computer system further comprising a plurality of access ports (260) that receive an access command for accessing the virtual volume from the file device,
wherein the write command includes destination information that specifies one of the plurality of access ports as a transmission destination, and
the real volume selector (214) selects one of the first and second real volumes based on the destination information included in the write command.

4. The computer system according to any one of claims 1 and 2, the computer system further comprising a plurality of the file devices (40, 60),
wherein the write command includes source information that specifies one of the plurality of file devices as a transmission source, and
the real volume selector selects (214) one of the first and second real volumes based on the source information included in the write command.

5. The computer system according to any one of claims 1 and 2,
the computer system further comprising:
a plurality of access ports (260) that receive an access command for accessing the virtual volume from the file device; and
a plurality of the file devices(40, 60),
wherein the write command includes:
destination information that specifies one of the plurality of access ports as a transmission destination; and
source information that specifies one of the plurality of file devices as a transmission source, and
the real volume selector (214) selects one of the first and second real volumes based on the combination of the destination information and the source information included in the write command.

6. The computer system according to any one of claims 1 to 5,
wherein the first real volume (AV1) runs at an access speed faster than that of the second real volume (AV2), and
the file device comprises:
a host computer (40) that transmits the write command via the access path based on which the first real volume is selected to use the file ; and
a file migration device (60) that transmits the write command via the access path based on which the second real volume is selected to migrate the file from the first real volume to the second real volume.

7. The computer system according to any one of claims 1 to 6,
wherein the storage apparatus comprises:
a first storage apparatus (24) that contains the first real volume (AV1); and
a second storage apparatus (25) that contains the second real volume (AV2), and
the first and second storage apparatuses (24, 25) are mutually connected over a network (82).

8. The computer system according to any one of claims 1 to 7,
wherein at least one of the first and second real volumes (AV1, AV2) comprises a plurality of hard disks (242, 252) controlled by RAID technology.

9. A storage apparatus (20) that stores a file handled by a file device (40, 60),
the storage apparatus comprising:
first and second real volumes (AV1, AV2) that have physical storage areas;
a virtual volume provider (212) that provides a virtual volume (VV1) having virtual storage areas to the file device;
a real volume selector (214) that, when a write command for writing the file to the virtual volume is transmitted from the file device to the storage apparatus, selects one of the first and second real volumes based on an access path over which the write command is transmitted;
a relation manager (216) that relates a virtual storage area on the virtual volume specified in the write command to a physical storage area on the selected real volume; and
a write executor (218) that writes the file specified in the write command to the related physical storage area.

10. The storage apparatus according to claim 9, the storage apparatus further comprising a read executor (219) that, when a read command for reading the file from the virtual volume is transmitted from the file device to the storage apparatus, reads the file specified in the read command from the physical storage area related to the virtual storage area specified in the read command.

11. The storage apparatus according to any one of claims 9 and 10, the storage apparatus further comprising a plurality of access ports (260) that receive an access command for accessing the virtual volume from the file device,
wherein the write command includes destination information that specifies one of the plurality of access ports as a transmission destination, and
the real volume selector (214) selects one of the first and second real volumes based on the destination information included in the write command.

12. The storage apparatus according to any one of claims 9 and 10,
wherein the write command includes source information that specifies one of a plurality of the file devices as a transmission source, and
the real volume selector (214) selects one of the first and second real volumes based on the source information included in the write command.

13. The storage apparatus according to any one of claims 9 and 10, the storage apparatus further comprising a plurality of access ports (260) that receive an access command for accessing the virtual volume from the file device,
wherein the write command includes:
destination information that specifies one of the plurality of access ports as a transmission destination; and
source information that specifies one of a plurality of the file devices as a transmission source, and
the real volume selector (214) selects one of the first and second real volumes based on the combination of the destination information and the source information included in the write command.

14. The storage apparatus according to any one of claims 9 to 13, wherein the first real volume (AV1) runs at an access speed faster than that of the second real volume (AV2).

15. The storage apparatus according to any one of claims 9 to 14, the storage apparatus further comprising:
a first storage apparatus (24) that contains the first real volume (AV1); and
a second storage apparatus (25) that contains the second real volume (AV2),
wherein the first and second storage apparatuses (24, 25) are mutually connected over a network (82).

16. The storage apparatus according to any one of claims 9 to 15,
wherein at least one of the first and second real volumes (AV1, AV2) comprises a plurality of hard disks (242, 252) controlled by RAID technology.

17. A file management method for managing a file stored by a storage apparatus (40, 60),
the file management method comprising:
incorporating in the storage apparatus (20) first and second real volumes (AV1, AV2) having physical storage areas;
providing (S130) a virtual volume (W1) having virtual storage areas for a file device (40, 60) that handles the file;
when a write command for writing the file to the virtual volume is transmitted from the file device to the storage apparatus, selecting (S210) one of the first and second real volumes based on an access path over which the write command is transmitted;
relating (S270) a virtual storage area on the virtual volume specified in the write command to a physical storage area on the selected real volume; and
writing (S280) the file specified in the write command to the related physical storage area.

18. The file management method according to claim 17, the file management method further comprising, when a read command for reading the file from the virtual volume is transmitted from the file device to the storage apparatus, reading (S320) the file specified in the read command from the physical storage area related to the virtual storage area specified in the read command.

19. The file management method according to any one of claims 17 and 18,
the file management method further comprising receiving the write command using a plurality of access ports (260) connected to the file device (40, 60),
wherein the write command includes destination information that specifies one of the plurality of access ports as a transmission destination, and
the selected real volume is selected based on the destination information included in the write command.

20. The file management method according to any one of claims 17 and 18,
wherein the write command includes source information that specifies one of a plurality of the file devices as a transmission source, and
the selected real volume is selected based on the source information included in the write command.

21. The file management method according to any one of claims 17 and 18,
the file management method further comprising receiving the write command using a plurality of access ports connected to the file device,
wherein the write command includes:
destination information that specifies one of the plurality of access ports as a transmission destination; and
source information that specifies one of a plurality of the file devices as a transmission source, and
the selected real volume is selected based on the combination of the destination information and the source information included in the write command.

22. The file management method according to any one of claims 17 to 21, wherein the first real volume (AV1) runs at an access speed faster than that of said second real volume (AV2).

23. The file management method according to any one of claims 17 to 22, the file management method further comprises:
providing first and second storage apparatuses (24, 25) that comprise the storage apparatus (20);
connecting the first and second storage apparatuses (24, 25) over a network (82);
incorporating the first real volume (AV1) in the first storage apparatus (24); and
incorporating the second real volume (AV2) in the second storage apparatus (25).

24. The file management method according to any one of claims 17 to 23, the file management method further comprising controlling by RAID technology a plurality of hard disks (242, 252) that comprise at least one of the first and second real volumes (AV1, AV2).
